# FASCICULE DE BREVET EUROPEEN

(11) **EP 2 235 817 B1**
(45) Date de publication et mention de la délivrance du brevet: **08.03.2017**
(21) Numéro de dépôt: 08864498.4
(22) Date de dépôt: 19.12.2008
(51) Int. Cl.: B60K 6/485, B60W 10/02, B60W 10/08, B60W 20/00, F02D 41/26, H02P 9/08, F02N 11/04, F02N 11/10, F02N 11/08, H02P 31/00

(54) **PROCEDE ET DISPOSITIF DE CONTROLE SECURISE D'UN SYSTEME A ALTERNO-DEMARREUR DE TYPE MICRO-HYBRIDE, ET SYSTEME MICRO-HYBRIDE CORRESPONDANT**
VERFAHREN UND VORRICHTUNG FÜR DIE AUSFALLSICHERHEITSKONTROLLE EINES GENERATOR-/ANLASSERSYSTEM DES MIKRO-HYBRID-TYPS UND ENTSPRECHENDES MIKRO-HYBRID-SYSTEM
METHOD AND DEVICE FOR FAILSAFE CONTROL OF AN ALTERNATOR/STARTER SYSTEM OF THE MICRO-HYBRID TYPE, AND CORRESPONDING MICRO-HYBRID SYSTEM

(30) Priorité: 21.12.2007 FR 0760230; 21.12.2007 FR 0760261; 21.12.2007 FR 0760206
(43) Date de publication de la demande: 06.10.2010
(73) Titulaire: Valeo Equipements Electriques Moteur, 94046 Créteil Cedex (FR)
(72) Inventeur: RANIER, Marc, F-94290 Villeneuve Le Roi (FR); LECOLE, Brice, F-75012 Paris (FR); GUBIAN, Régis, F-75012 Paris (FR)
(74) Mandataire: Tran, Chi-Hai
(86) Numéro de dépôt international: PCT/FR2008/052380
(87) Numéro de publication internationale: WO 2009/081066

(56) Documents cités:
- EP-A- 1 253 698
- EP-A- 1 391 338
- FR-A- 2 875 557
- JP-A- 2002 153 097

## Description

### DOMAINE TECHNIQUE DE L'INVENTION.

La présente invention concerne un procédé et un dispositif de contrôle sécurisé d'un système micro-hybride d'un véhicule.

L'invention concerne aussi un système micro-hybride apte à la mise en oeuvre du procédé et comprenant ce dispositif.

### ARRIERE PLAN TECHNOLOGIQUE DE L'INVENTION.

Des considérations d'économie d'énergie et de réduction de la pollution, surtout en milieu urbain, conduisent les constructeurs de véhicules automobiles à équiper leurs modèles d'un système d'arrêt/ relance automatique du moteur thermique, tel que le système connu sous le terme anglo-saxon de « Stop and Go ».

Ainsi que le rappelle la société VALEO EQUIPEMENTS ELECTRIQUES MOTEUR dans la demande de brevet FR2875549, les véhicules sont rendus aptes à fonctionner selon le mode « Stop and Go » grâce à une machine électrique réversible, ou alterno-démarreur, couplée au moteur thermique, alimentée par un onduleur en mode « démarreur ».

Comme décrit dans le document EP 1 253 698 on relance le moteur thermique avec l'énergie emmagasinée dans une capacité sous le contrôle d'un circuit de commande recevant des informations sur le voltage de la capacité et de la batterie du véhicule et pilotant des interrupteurs pour charger la capacité par l'intermédiaire de la batterie lorsque la charge de la capacité n'est pas suffisante.

Dans le document. EP 1391338 on relance le moteur thermique lorsque la capacité de la batterie, qui fournit de l'électricité au moteur électrique d'actionnement d'un compresseur électrique d'un climatiseur, tombe en dessous d'une valeur prédéterminée.

L'utilisation d'un système à alterno-démarreur dans un mode de fonctionnement « Stop and Go » consiste, sous certaines conditions, à provoquer l'arrêt complet du moteur thermique lorsque le véhicule est lui-même à l'arrêt, puis à relancer le moteur thermique à la suite, par exemple, d'une action du conducteur interprétée comme une demande de relance du moteur thermique.

Une situation typique de « Stop and Go » est celle de l'arrêt à un feu rouge. Lorsque le véhicule s'arrête au feu, le moteur thermique est automatiquement stoppé, puis, quand le feu devient vert, le moteur est relancé au moyen du système à alterno-démarreur, comme suite à la détection par le système de l'enfoncement de la pédale d'embrayage par le conducteur, ou de toute autre action traduisant la volonté du conducteur de provoquer un déplacement de son véhicule.

Pour ce faire, ainsi que l'indique également la société VALEO EQUIPEMENTS ELECTRIQUES MOTEUR dans la demande de brevet FR2875551, le système « Stop and Go » utilise des informations représentatives de l'état de fonctionnement du véhicule, informations provenant de capteurs du véhicule, tels que les capteurs de température de l'habitacle ou de détection de la position de la pédale d'embrayage, ou les informations lues sur un bus de communication de données, comme la vitesse du véhicule ou la vitesse de rotation du moteur.

Il va de soi que la fonction de relance automatique réalisée par un système à alterno-démarreur est une fonction qui doit assurer un certain niveau de sûreté de fonctionnement.

Ainsi que l'expose la société VALEO EQUIPEMENTS ELECTRIQUES MOTEUR dans la demande de brevet FR2875557, la caractéristique essentielle d'un procédé de commande d'un système à alterno-démarreur en mode démarreur est de comporter des étapes de vérification de conditions dites préalables à la relance du moteur thermique avant la phase de relance, et des conditions dites « sécuritaires » pendant toute la phase de relance moteur.

Une condition préalable à la relance du moteur est notamment déterminée par au moins une action intentionnelle du conducteur, par exemple, l'enfoncement de plus de 90% de la pédale d'embrayage.

Une condition supplémentaire est, par exemple, que le réseau de bord du véhicule soit alimenté, c'est-à-dire que la clé de contact du véhicule soit en position +APC « après contact », et que la chaîne de traction soit ouverte.

En effet, il n'est pas question, alors que l'on se trouve à l'arrêt (c'est à dire à vitesse nulle) et le moteur thermique arrêté par la fonction automatique, de relancer celui-ci sans que l'on soit certain que la chaîne de traction soit ouverte.

Si elle était fermée, la relance du moteur pourrait entraîner le véhicule et par suite le faire avancer (ou reculer), mettant ainsi en danger la sécurité de biens ou de personnes.

Ainsi, afin d'éviter ce type de situation, on met aujourd'hui en oeuvre une solution qui utilise une ligne spécifique de contrôle Auth. Ond. pour autoriser la commande de l'onduleur. Cette ligne spécifique de contrôle Auth. Ond. provient d'un système de commande du véhicule, externe à la fonction arrêt/ relance automatique, ce qui résout la plupart des contraintes de sécurité.

En complément, on introduit, afin de diagnostiquer l'état activé de la machine électrique, une sécurité supplémentaire. Cette sécurité est réalisée par la ligne Diag1. Ond. qui convoie une information indiquant la rotation de la machine électrique, information obtenue à partir de signaux de capteurs de position du rotor.

Cette information est ensuite mise en forme par le microprocesseur de pilotage de la machine électrique, et est transmise au microprocesseur de l'unité de contrôle électronique du véhicule parmi les signaux d'état et défauts.

Cette solution résout la plupart des contraintes de sécurité inhérentes à la fonction mais révèle certains inconvénients.

En effet, l'information Diag1. Ond. n'est rendue disponible pour l'unité de contrôle électronique du véhicule que lorsque le microprocesseur de pilotage de la machine électrique est fonctionnel. Ceci implique un certain délai logiciel pour être réactif lorsque l'information n'est pas présente (délai pour détecter l'absence d'information).

Un autre inconvénient, est que cette solution nécessite la mise en oeuvre d'un microprocesseur ayant une capacité de traitement importante, car le microprocesseur de pilotage de la machine électrique doit à la fois commander celle-ci, en assurer la surveillance, et supporter tout ou partie de la stratégie système, tout en réalisant l'interface vers l'extérieur.

Cette solution n'est pas non plus adaptée au cas où la machine électrique est utilisée à la fois pour la relance du moteur thermique et pour l'assistance en couple.

Une simple ligne de contrôle (Auth. Ond) ne peut être utilisée pour empêcher aussi bien des relances que des opérations d'assistance en couple. En effet, la fonction de relance ne peut être activée que si la chaîne de traction est ouverte, alors que la fonction d'assistance en couple ne peut être activée que lorsque la chaîne de traction est fermée. Ces deux conditions se révèlent contradictoires.

Cette solution connue de sécurisation d'un système arrêt/ relance ne tire pas non plus bénéfice de la synergie possible entre équipements embarqués, du fait de la présence de plusieurs microcontrôleurs au sein du système.

Il existe par conséquent un besoin pour une nouvelle architecture qui permette de s'affranchir de l'ensemble de ces problématiques en augmentant le niveau de sécurité de la fonctionnalité globale.

### DESCRIPTION GENERALE DE L'INVENTION.

La présente invention vise à satisfaire ce besoin et a précisément pour objet un procédé de contrôle sécurisé d'un système micro-hybride à freinage récupératif et/ou assistance en couple construit autour d'un alterno-démarreur couplé à un moteur thermique d'un véhicule.

Le véhicule dont il s'agit est connu en soi, et comporte au moins une unité de contrôle électronique, des capteurs véhicule, un bus de communication de données et un réseau électrique de bord.

Le système micro-hybride comporte classiquement au moins une machine électrique tournante munie d'un moyen de détection de rotation, des circuits de puissance comportant au moins un onduleur, un circuit d'excitation alimentant la machine électrique tournante, et un redresseur alimenté par celle-ci.

Le système micro-hybride comporte aussi des circuits de conversion d'énergie réliés à un moyen de stockage d'énergie alimenté par le redresseur.

Des premier et second circuits de commande commandent respectivement ces circuits de puissance, et ces circuits de conversion d'énergie.

De manière connue, le procédé de contrôle sécurisé de ce système micro-hybride consiste à:
- générer des signaux de contrôle du système à partir de premiers signaux d'information Capt. Véh. représentatifs d'un état de fonctionnement du véhicule provenant des capteurs véhicule;
- générer au moyen du premier circuit de commande des signaux de commande des circuits de puissance à partir de signaux de diagnostic représentatifs d'un état de fonctionnement du système.

Le procédé de contrôle sécurisé de ce système micro-hybride selon l'invention est remarquable en ce que l'on génère en outre les signaux de contrôle du système au moyen du second circuit de commande sous le contrôle de l'unité de contrôle électronique.

Fort avantageusement, on génère aussi les signaux de commande Cd. Ond. et Cd. Exc. des circuits de puissance au moyen du premier circuit de commande à partir de plus de seconds signaux d'information provenant du bus de communication de données.

De préférence, on génère en outre les signaux de contrôle du système à partir d'au moins un premier signal de diagnostic Diag1. Ond. et/ou Diag1. Exc..

Alternativement, on génère en outre préférentiellement les signaux de commande Cd. Ond. et Cd. Exc. des circuits de puissance au moyen du premier circuit de commande à partir de plus d'un premier signal de diagnostic Diag1. Ond..

Le procédé selon l'invention tire bénéfice du fait qu'au moins un premier signal de commande Cd. Exc. parmi les signaux de commande Cd. Ond. et Cd. Exc. constitue au moins un deuxième signal de diagnostic Diag1. Exc..

On génère en outre, de préférence, les signaux de contrôle et/ ou les signaux de commande à partir de plus d'un troisième signal de diagnostic Diag3. Ond. représentatif d'un niveau de tension à une sortie du redresseur.

Fort avantageusement, le procédé de contrôle sécurisé d'un système micro-hybride selon l'invention consiste en outre à :
- générer au moins un premier signal de contrôle, Dd. Ond. et/ou Dd. Exc., parmi les signaux de contrôle au moyen d'un premier microprocesseur agencé dans le second circuit de commande traitant au moins le premier signal de diagnostic Diag1. Ond., ou bien le deuxième signal de diagnostic Diag1. Exc., ou encore le troisième signal de diagnostic Diag3. Ond.;
- générer au moins un second signal de contrôle Auth. Exc. parmi les signaux de contrôle au moyen d'un premier circuit de décision en logique câblée agencé dans le second circuit de commande;
- générer les signaux de commande Cd. Ond. et Cd. Exc. au moyen exclusivement d'un deuxième circuit de décision en logique câblée agencé dans le premier circuit de commande.

De plus, on tire bénéfice du fait que le procédé de contrôle sécurisé consiste en outre à :
- générer le second signal de contrôle Auth. Exc., ou plusieurs, en fonction d'au moins un premier signal d'activation Act. Exc. parmi des signaux d'activation Act. Exc et/ou d'inhibition Inh. Ond. générés par le premier microprocesseur et d'un signal de contact +APC/ Vbat représentatif de la mise sous tension du réseau électrique de bord ;
- générer le premier signal de commande Cd. Exc., ou plusieurs, en fonction du second signal de contrôle Auth. Exc., ou plusieurs, et d'au moins un premier signal de pilotage Pil. Exc. parmi des signaux de pilotage générés par un second microprocesseur agencé dans le premier circuit de commande.

Avantageusement, ce procédé consiste en outre à transmettre des signaux d'état/défaut au moyen du second microprocesseur vers le premier microprocesseur.

Dans le procédé de contrôle sécurisé selon l'invention, le circuit d'excitation est commandé par le premier signal de commande Cd. Exc. qui est issu, pour des raisons de fiabilité, du second circuit de logique câblée, et où il a été validé par le second signal de contrôle Auth. Exc..

Selon une autre caractéristique du procédé selon l'invention, au moins un signal de pilotage parmi des signaux de pilotage générés dans le premier circuit de commande est forcé à un état inactif lorsque une vitesse de rotation signée de ladite machine électrique tournante est à l'extérieur d'une plage de vitesses prédéterminée.

L'invention concerne également un dispositif de contrôle sécurisé d'un système micro-hybride adapté à la mise en oeuvre du procédé décrit ci-dessus.

Ce dispositif est du type de ceux où:
- des signaux de contrôle du système sont générés à partir de premiers signaux d'information Capt. Véh. représentatifs d'un état de fonctionnement du véhicule provenant des capteurs véhicule ;
- le premier circuit de commande reçoit des signaux de diagnostic Diag2. Exc. et Diag2. Ond. représentatifs d'un état de fonctionnement du système, et génère des signaux de commande Cd. Exc. et Cd. Ond. des circuits de puissance.

Le dispositif de contrôle sécurisé selon l'invention est remarquable en ce que le second circuit de commande des circuits de conversion d'énergie, interfacé avec l'unité de contrôle, génère les signaux de contrôle Dd. Exc., Dd. Ond., Auth. Exc., et Auth. Ond..

De préférence, le premier circuit de commande génère en outre les signaux de commande Cd. Ond. et Cd. Exc. des circuits de puissance à partir de plus de seconds signaux d'information provenant du bus de communication de données.

Avantageusement, ce premier circuit de commande génère en outre ces signaux de commande Cd. Ond. et Cd. Exc. à partir de plus d'un premier signal de diagnostic Diag1. Ond. parmi les signaux de diagnostic du système.

De préférence, un premier signal de commande Cd. Exc. parmi les signaux de commande Cd. Ond. et Cd. Exc. constitue au moins un deuxième signal de diagnostic Diag1. Exc. parmi les signaux de diagnostic du système.

Ces signaux de diagnostic du système comprennent aussi préférentiellement un troisième signal de diagnostic Diag3. Ond. représentatif d'un niveau de tension à une sortie dudit redresseur.

Selon l'invention, le dispositif de contrôle sécurisé d'un système micro-hybride comprend en outre avantageusement :
- un premier microprocesseur agencé dans le second circuit de commande qui traite au moins le premier signal de diagnostic Diag1. Ond., ou bien le deuxième signal de diagnostic Diag1. Exc., ou encore le troisième signal de diagnostic Diag3. Ond., et qui génère au moins un premier signal de contrôle, Dd. Ond. ou Dd. Exc., parmi lesdits signaux de contrôle du système;
- un premier circuit de décision en logique câblée agencé dans le second circuit de commande, et qui génère au moins un second signal de contrôle Auth. Exc. parmi ces signaux de contrôle ;
- un deuxième circuit de décision en logique câblée agencé dans le premier circuit de commande, et qui génère les signaux de commande Cd. Ond. et Cd. Exc. des circuits de puissance.

De préférence, ce dispositif de contrôle sécurisé d'un système micro-hybride comprend de plus :
- une première porte logique produisant le second signal de contrôle Auth. Exc., ou plusieurs, en fonction d'au moins un premier signal d'activation Act. Exc. parmi des signaux d'activation et/ou d'inhibition générés par le premier microprocesseur, et d'un signal de contact +APC/ Vbat représentatif de la mise sous tension du réseau électrique de bord ;
- un second microprocesseur agencé dans le premier circuit de commande et générant des signaux de pilotage, Pil. Ond. et/ou Pil. Exc. ;
- une deuxième porte logique générant le premier signal de commande Cd. Exc., ou plusieurs, en fonction du second signal de contrôle Auth. Exc., ou plusieurs, et d'au moins un premier signal de pilotage Pil. Exc..

Avantageusement, le second microprocesseur transmet des signaux d'état/défaut vers le premier microprocesseur, et, dans le dispositif selon l'invention, le premier signal de commande Cd. Exc. commande le circuit d'excitation.

De préférence également, le premier signal de diagnostic Diag1. Ond.)est fourni par le moyen de détection de rotation.

L'invention vise aussi un système micro-hybride comprenant le dispositif de contrôle sécurisé décrit ci-dessus, et, notamment un système micro-hybride comprenant de plus une fonction de freinage récupératif.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La Figure 1 est une représentation schématique d'un système micro-hybride à freinage récupératif et/ou assistance en couple construit autour d'un alterno-démarreur couplé à un moteur thermique de véhicule.
La Figure 2 est un schéma de principe d'un dispositif de contrôle sécurisé connu d'un système à alterno-démarreur de type standard.
La Figure 3a est un schéma de principe, selon l'invention, d'un premier mode de réalisation préféré du dispositif de contrôle sécurisé d'un système micro-hybride.
La Figure 3b est un schéma de principe, selon l'invention, d'un deuxième mode de réalisation préféré du dispositif de contrôle sécurisé d'un système micro-hybride.
La Figure 3c est un schéma de principe, selon l'invention, d'un troisième mode de réalisation préféré du dispositif de contrôle sécurisé d'un système micro-hybride.
Les Figures 4a à 4e montrent des processus d'élaboration et de surveillance de signaux intervenant dans les procédé, dispositif et système selon l'invention.

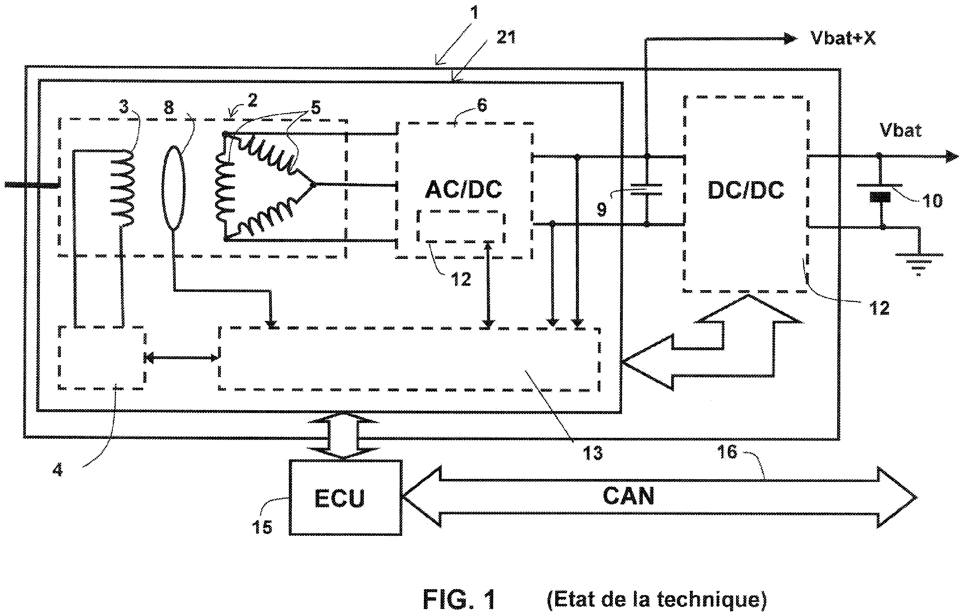

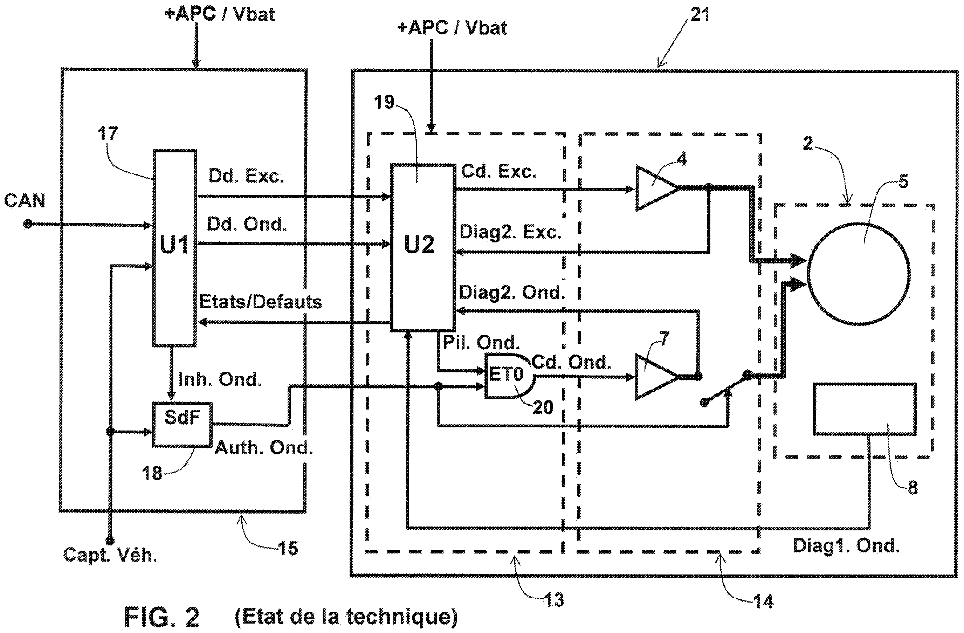

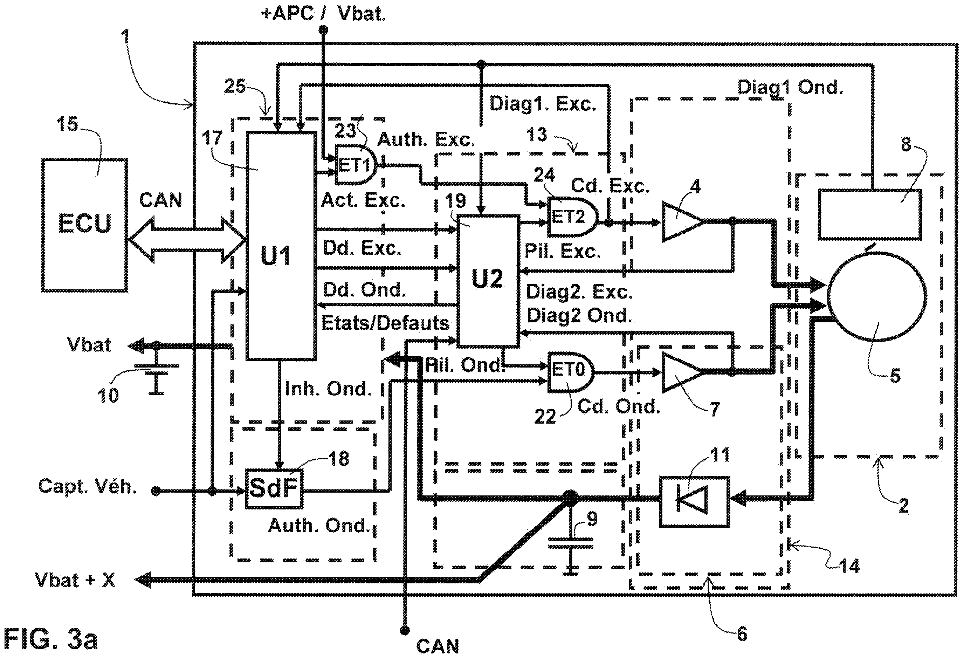

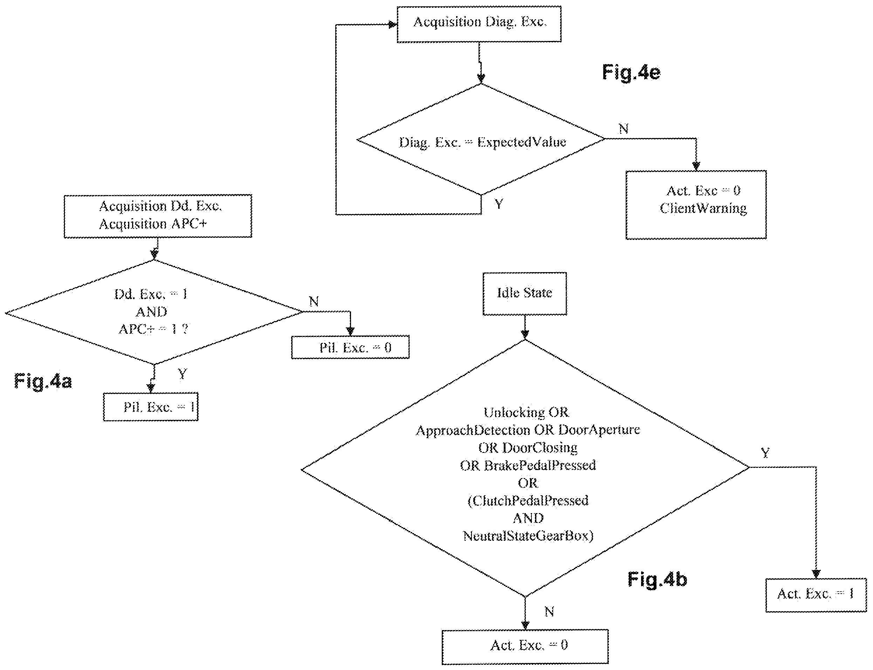

Entre les Figures 1 et 2 relatives à l'état de la technique et les Figures 3a à 3c et 4a à 4e des références numériques identiques sont utilisées mais ne désignent pas des éléments identiques.

### DESCRIPTION DES MODES DE REALISATION PREFERES DE L'INVENTION.

Les modes de réalisation préférés de l'invention concernent les véhicules équipés d'un système micro-hybride 1, c'est-à-dire construit autour d'un alterno-démarreur et disposant d'une fonction de récupération d'énergie au freinage et/ou d'assistance en couple, tels que représenté schématiquement sur la Figure 1.

Une architecture de type micro-hybride, dite encore de type « 14+X », comprend, comme le système à alterno-démarreur classique, une machine électrique tournante 2 présentant un inducteur 3 alimenté par un circuit d'excitation 4, des enroulements de phases 5 alimentés par un convertisseur alternatif-continu réversible 6 fonctionnant en onduleur 7, et un capteur de la position 8 du rotor 3.

Mais, à la différence du système à alterno-démarreur classique, le convertisseur alternatif-continu 6 est alimenté par une super-capacité 9 au lieu d'être connecté directement à la batterie de bord 10.

Dans le fonctionnement en génératrice, la machine électrique 2 charge la super-capacité 9 au moyen du convertisseur alternatif-continu réversible 6 fonctionnant en redresseur 11 et fournit au réseau électrique de bord une tension Vbat+X supérieure à la tension de batterie Vbat.

Des circuits de conversion d'énergie 12 constitués par un convertisseur continu-continu, permettent des échanges d'énergie électrique entre la batterie 10 de bord qui fournit un premier réseau de bord à la tension Vbat et la super-capacité 9 qui fournit un second réseau de bord à la tension Vbat+X.

Un circuit de commande 13 pilote le circuit d'excitation 4, le convertisseur alternatif-continu réversible 6, dont l'onduleur 7 constituant les circuits de puissance 14 du système 1, et les circuits de conversion d'énergie 12.

Le circuit de commande 13 est contrôlé par une unité de contrôle électronique 15 interfacée avec le bus CAN 16.

Le système micro-hybride 1 représenté sur la Figure 1 permet de mettre en oeuvre des fonctions de freinage récupératif et d'assistance en couple : une partie de l'énergie mécanique du freinage transformée en énergie électrique par la machine électrique 2 fonctionnant en génératrice, et stockée dans la super-capacité 9, est utilisée pour apporter un complément de couple au moteur thermique en faisant fonctionner la machine électrique 2 en moteur électrique.

De même que pour un système à alterno-démarreur classique, il se pose pour un système micro-hybride 1 le problème de son contrôle sécurisé.

Une solution connue, qui a déjà été mise en oeuvre dans le cas d'un système à alterno-démarreur classique, est représentée sur la Figure 2.

La Figure 2 montre de façon détaillée le circuit de commande 13 et l'unité de contrôle électronique 15 d'un système à alterno-démarreur 21 classique.

L'unité de contrôle électronique 15 du véhicule, alimentée par la tension de batterie Vbat ou après contact +APC, comprend un premier microprocesseur 17, et un premier circuit de décision 18 en logique câblée, qui reçoivent des premiers signaux d'information Capt. Véh. en provenance des capteurs du véhicule, et génèrent les signaux de contrôle Dd. Exc., Dd. Ond., Auth. Ond. d'un circuit de commande 13, c'est-à-dire une demande de fermeture du circuit d'excitation Dd. Exc., une demande d'entrée en fonction de l'onduleur Dd. Ond.,et une autorisation de l'entrée en fonction de l'onduleur Auth. Ond.

Le circuit de commande 13, alimenté également par la tension de batterie Vbat ou un après contact +APC, comprend un second microprocesseur 19, et une porte ET 20, qui reçoivent les signaux de contrôle Dd. Exc., Dd. Ond., Auth. Ond. de l'unité de contrôle électronique 15, et génèrent les signaux de commande de fermeture du circuit d'excitation Cd. Exc. et de mise en fonction de l'onduleur Cd. Ond. qui commandent respectivement le circuit d'excitation 4 et l'onduleur 7 des circuits de puissance 14.

Le second microprocesseur 19 reçoit de plus des signaux de diagnostic Diag2. Exc. et Diag2. Ond. sur l'état de la fermeture du circuit d'excitation 4, et la mise en fonction de l'onduleur 7, respectivement.

En même temps, le second microprocesseur 19 diagnostique la vitesse de la machine électrique tournante 2 au moyen d'une ligne dédiée Diag1. Ond. reliée au capteur de position 8 de la machine 2.

Les états et défauts de fonctionnement du système à alterno-démarreur classique 21 sont signalés au premier microprocesseur 17 de l'unité de contrôle électronique 15 par la transmission de signaux d'état/ défaut (Etats/Défauts) en provenance du circuit de commande 13.

On utilise une ligne d'inhibition dédiée Inh. Ond. provenant du premier microprocesseur 17, qui valide, ou non, l'autorisation Auth. Ond. de l'entrée en fonctionnement de l'onduleur 7 générée par le premier circuit de décision 18 en logique câblée, afin de résoudre la majeure partie des contraintes de sûreté de fonctionnement SdF liées à la fonction redémarrage, et rappelées ci-dessus.

Le signal d'autorisation Auth. Ond. d'entrée en fonctionnement de l'onduleur 7 appliqué sur une entrée de la porte ET 20 du circuit de commande 13 dont la sortie Cd. Ond. commande l'onduleur 7, valide le signal de pilotage de l'onduleur Pil. Ond. généré par le second microprocesseur 19, et appliqué sur l'autre entrée.

Le fait que le contrôle de la mise en fonction de l'onduleur 7 soit assuré par le premier microprocesseur 17 extérieur à la fonction, et par des circuits de décision 18,20 en logique câblée, contribue au renforcement de la sécurité.

Mais le dispositif de contrôle sécurisé du système à alterno-démarreur 21 représenté sur la Figure 2 révèle quelques faiblesses, qui sont :
- premièrement, le diagnostic Diag1. Ond. de la mise à ON du mode moteur du convertisseur alternatif/ continu réversible 6 n'est émis qu'à destination du second microcontrôleur 19 du circuit de commande 13 de l'onduleur 7. De ce fait, l'information n'est rendue disponible pour l'unité de contrôle électronique 15 que lorsque le second microprocesseur 19 est fonctionnel. Ceci implique un certain délai logiciel pour être réactif lorsque l'information n'est pas disponible (temps de détecter l'absence d'information).
- deuxièmement, l'onduleur 7 est mis à ON à partir d'un organe externe au système, et contraint dans le cas d'une architecture de type micro-hybride ou dite de type «14+X », telle que représentée schématiquement sur la Figure 1, (c'est-à-dire, où l'on dispose d'un stockeur d'énergie 9 intermédiaire et de capacité à réaliser une fonction de récupération d'énergie au freinage et/ou d'assistance en couple du moteur) soit
   - de modifier l'architecture véhicule et/ou des organes extérieurs à la fourniture dans le cas où la fonction est présente ;
   - soit d'utiliser une autre architecture qui ne révèle pas ce problème lorsque l'on souhaite une fonction autonome, c'est à dire une fonction qui impactera le moins possible (voire pas du tout) de composant externe à la fourniture.

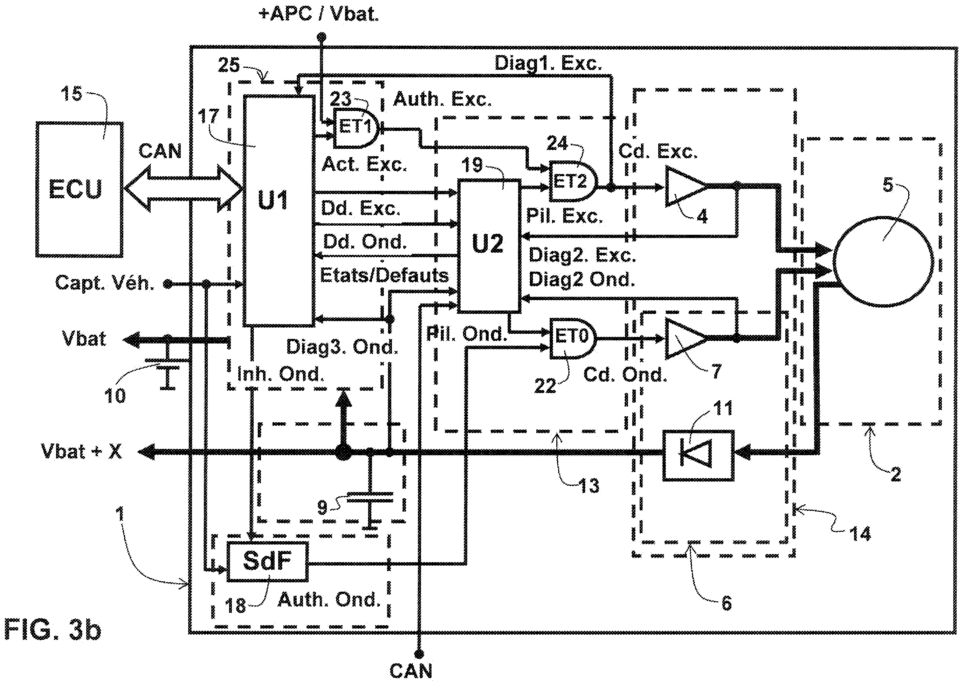

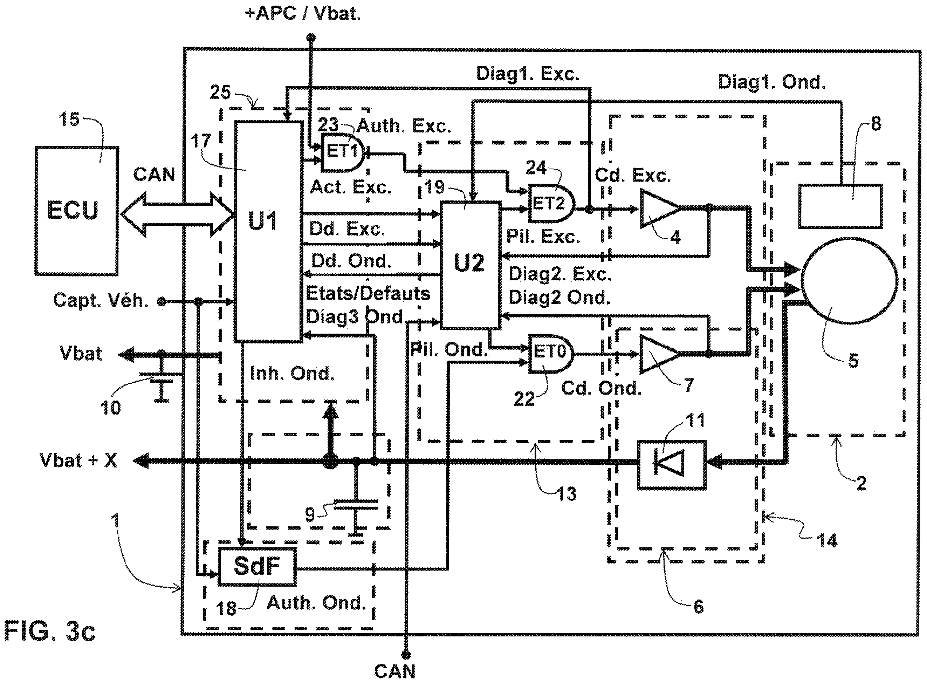

C'est cette dernière solution qui est exposée en détail ci-après, en liaison avec les Figures 3a, 3b, et 3c, et dont le principe consiste à utiliser deux circuits de commande 25, 13 mis en oeuvre au sein du système ; ces circuits contenant pour chacune un microprocesseur 17, 19 sont agencées de façon à ce qu'ils se surveillent mutuellement (par exemple, le second circuit de commande 13 surveille le premier circuit de commande 25 afin d'inhiber ses demandes dans le cas où l'on a détecté que son microprocesseur 17 était défaillant, ou qu'il déclenche une action intempestive, c'est à dire non désirée), ce qui permet la sécurisation de l'activation du mode moteur (Assistance en couple ou démarrage/ redémarrage) en évitant la mise en oeuvre de solutions de sécurisation plus coûteuses au sein, par exemple de l'électronique de commande de la machine électrique tournante 2. ,
- troisièmement, dans le cas d'un système micro-hybride dit de type «14+X », alors que de nombreuses ressources du second microprocesseur 19 sont utilisées pour la surveillance et la commande de la machine électrique 2, le second microprocesseur 19 est en même temps l'organe d'interface avec l'extérieur du système, ce qui requiert une capacité de traitement très importante (pour réaliser à la fois l'interface vers l'extérieur et la commande machine). De plus, il doit également supporter tout ou partie de la stratégie système.
- quatrièmement, on ne peut pas se protéger dans un système micro-hybride 1 comme dans un système à alterno-démarreur classique, à la fois contre les fonctions de redémarrage et/ou d'assistance en couple intempestifs par une simple ligne d'inhibition Auth. Ond.. En effet, la fonction de redémarrage ne peut être activée que si la chaîne de traction est ouverte, alors que la fonction d'assistance en couple ne peut être activée que lorsque la chaîne de traction est fermée. Ces deux conditions sont donc contradictoires.

La solution montrée sur la Figure 2, ne convient donc pas à une architecture de type micro-hybride 1.

Les Figures 3a, 3b et 3c montrent en revanche une solution de sécurisation, selon l'invention, adaptée à une telle architecture.

Conformément à des principes généraux de l'invention, on propose, dans le cadre d'un système réalisant les fonctions de redémarrage automatique et/ou d'assistance en couple du moteur, d'utiliser une architecture distribuée :
- d'une part, un organe dit de décision (où sont implémentées les stratégies de haut niveau), tel qu'un premier microprocesseur 17 agencé dans un circuit de commande 25, localisé de préférence le convertisseur continu-continu 12 du système micro-hybride 1 ;
- d'autre part, un organe d'exécution (la machine électrique réversible 2 et son électronique associée 13, 14) commandée par l'organe de décision décrit ci-dessus.

En distribuant ainsi l'architecture dans deux organes séparés (circuits de commande 25 et 13), on évite l'introduction d'un microcontrôleur additionnel dans le système micro-hybride 1 représenté sur la Figure 1.

De plus, en utilisant deux microprocesseurs 17,19 séparés mais appartenant déjà, dans le cadre d'une architecture de type micro-hybride 1, au système, on évite également de modifier l'architecture du véhicule dans le cas où la fonction n'est pas présente.

En complément, afin de résoudre les problématiques liées à la mise à ON intempestive du mode Moteur (mise à ON intempestive des fonctions redémarrage et/ou assistance en couple), l'architecture entre les deux microprocesseurs 17,19 est contrainte, notamment afin de ne pas déclencher intempestivement un de ces modes en cas de panne simple de l'un des deux microprocesseurs 17,19 (augmentation du niveau de sécurité de la fonction globale).

Afin de s'affranchir d'une panne simple du premier microprocesseur 17, il convient d'implémenter au sein du microprocesseur 19 du premier circuit de commande 13 des circuits de puissance 14 des stratégies d'évaluation ou de diagnostic des ordres donnés par le premier microprocesseur 17.

Le but de ces stratégies est de ne pas autoriser la réalisation d'une demande du premier microprocesseur 17, par exemple une demande de fermeture du circuit d'excitation Dd. Exc., ou de mise en fonction de l'onduleur Dd. Ond., lorsque celle ci est jugée inappropriée.

Pour ce faire, le circuit de commande 13 des circuits de puissance 14 doit recevoir de l'extérieur du système certaines informations de contexte (à titre d'exemple : la vitesse du véhicule, l'état du moteur ou l'état de la chaîne de traction), au moyen par exemple (et préférentiellement) du réseau de bord véhicule CAN pour ne pas impacter le coût de la fonction avec un grand nombre d'Entrées Sorties supplémentaires.

Afin de s'affranchir d'une panne simple du second microprocesseur 19 agencé dans l'organe d'exécution (circuit de commande 13 des circuits de puissance 14, dont l'onduleur 7), il convient :
- soit de sécuriser la demande de mise à ON en aval du second microprocesseur 19, par exemple au moyen d'un ET logique 22 entre un signal de pilotage de l'onduleur Pil. Ond. provenant du second microprocesseur 19, et un signal Auth. Ond. non généré par ce second microprocesseur 19 (solution qui a été expliquée en liaison avec la Figure 2, de l'état de la technique) ;
- soit de diagnostiquer au moyen du premier microprocesseur 17 l'activation des circuits de puissance 14 (par exemple au moyen d'une ligne de diagnostic Diag1. Exc.) et de faire agir celui-ci en conséquence. (On notera que, de cette manière on n'agit pas sur la cause, puisque l'on commandera la mise à ON des circuits de puissance 14, mais on réduit le risque, car ce mode ne dure pas longtemps, le temps de la boucle).

On peut également combiner ces deux types de sécurités en utilisant par exemple le premier type de sécurité pour la fonction « redémarrage » et le deuxième type de sécurité pour la fonction « assistance en couple » (ou vice-versa); ceci permet de s'affranchir de la problématique sur la condition « chaîne de traction » citée précédemment.

De même, ces deux sécurités peuvent être réalisées à partir de, ou vers le circuit de commande 25, ce qui leur permet d'être disponibles même en cas de défaillance du second microprocesseur 19 implanté dans le circuit de commande 13. Cette solution présente l'avantage, dans le présent cadre d'un système micro-hybride 1, de ne pas impacter le reste de l'architecture électrique véhicule (notamment dans le cadre d'une fonction optionnelle).

Les principes ci-dessus sont mis en oeuvre dans les trois modes de réalisation préférés de l'invention montrés sur les Figures 3a, 3b et 3c.

Dans cette architecture, l'organe de décision, constitué notamment par le premier microprocesseur 17, acquiert des premiers signaux d'information Capt. Véh. provenant de l'extérieur du système, et utilise ces premiers signaux d'information pour générer un signal d'autorisation d'excitation Auth. Exc. de la machine électrique 2.

Ce signal d'autorisation d'excitation Auth. Exc. est véhiculé vers le circuit d'excitation 4, préférentiellement par une première liaison filaire dédiée, afin de permettre l'excitation de la machine 2.

Comme montré sur les Figures 3a, 3b et 3c, l'excitation ne peut avoir lieu que par un premier signal de commande Cd. Exc. résultant de la validation d'un premier signal de pilotage Pil. Exc. par le signal de d'autorisation de l'excitation Auth. Exc. généré par le premier microprocesseur 17.

Le premier signal de pilotage Pil. Exc. est généré par le second microprocesseur 19 en réponse à une demande de fermeture du circuit d'excitation Dd. Exc. provenant du premier microprocesseur 17.

Entre cette demande Dd. Exc. (entrée du second microprocesseur 19 et la commande (sortie du second microprocesseur 19), un processus de validation de l'ordre peut être mis en oeuvre afin d'empêcher la mise à ON de l'excitation du fait d'une simple erreur du premier microprocesseur 17. Ce processus de validation se réalise au moyen de signaux d'informations provenant du bus de communication de données du véhicule CAN.

Le processus de validation peut revêtir différentes formes, et notamment à titre d'exemple :
- La vérification de la cohérence entre la demande d'activation des modes générateur ou moteur (démarreur ou assistance en couple), et l'information de présence de l'information après contact.

Le processus d'élaboration du signal de pilotage Pil. Exc. au sein du second microprocesseur 19 est représenté à la Figure 4a dans laquelle les repères Y et N correspondent respectivement à « Oui » et « Non » et « AND » est la fonction logique « ET ».

Comme montré à la Figure 4a, le signal de de pilotage Pil. Exc. est élaboré à partir des signaux Dd. Exc. et APC+. Lorsque ces deux signaux sont à l'état « 1 », le signal Pil. Exc. est validé (Pil. Exc.=1) et l'exécution est donc autorisée. Dans le cas contraire, l'exécution n'est pas autorisée (Pil. Exc.=0).

Ce processus de validation complémente le signal d'autorisation Auth. Exc. qui valide le premier signal de pilotage Pil. Exc. dans une première porte logique ET 24 comme le montrent les Figures 3a, 3b et 3c.

En variante, on réalise sur ce signal d'autorisation de l'excitation Auth. Exc. une anticipation de l'activation de la mise de contact afin de préfluxer la machine électrique 2.

Dans ce cas, le signal d'anticipation peut revêtir plusieurs valeurs comme (à titre d'exemple):
- Décondamnation du véhicule à distance ;
- Détection d'approche d'un utilisateur autorisé ;
- Ouverture d'une porte ;
- Fermeture d'une porte ;
- Insertion de la clé de contact ;
- Appui sur la pédale d'embrayage ;
- Appui sur la pédale de frein ET levier de la boite de vitesse en position neutre.

La commutation de Auth. Exc est réalisée préférentiellement dans le second circuit de commande 25 au moyen des informations fournies au premier microprocesseur 17 par l'intermédiaire du bus de communication de données du véhicule CAN. Elle se réalise par validation du signal d'activation Act. Exc de l'excitation. Ce signal est ensuite transformé en signal d'autorisation de la fermeture du circuit d'excitation Auth. Exc. après avoir été validé dans une deuxième porte logique ET 23 par le signal de contact +APC / Vbat représentatif de la mise sous tension du réseau électrique de bord.

Ceci comporte un intérêt particulier dans le cas du présent système micro-hybride 1, où l'on dispose d'un stockeur d'énergie 9, puisque dans ce cas, on peut agir sur ce signal d'autorisation Auth. Exc. par l'intermédiaire du signal Act. Exc et interdire ainsi l'excitation quand un défaut du stockeur d'énergie 9 est détecté (vu par un signal de diagnostic supplémentaire comme il sera expliqué plus loin), ce qui permet d'augmenter le niveau de sécurité de la fonction globale en diminuant le risque général du risque de court-circuit au niveau machine électrique 2.

Le processus d'élaboration du signal Act. Exc. au sein de l'unité de contrôle électronique 17 est représenté à la Figure 4b dans laquelle les repères Y et N correspondent respectivement à « Oui » et « Non » et « AND » et « OR » aux fonctions logiques « ET » et «OU».

Comme montré à la Figure 4b, le moteur thermique du véhicule étant à l'état de repos IdleState, le signal Act. Exc. ne devient actif (Act. Exc .= 1) que lorsqu'au moins un des signaux ci-après devient actif, à savoir, le signal Unlocking, le signal ApproachDetection, le signal DoorAperture, le signal DoorClosing, le signal ClutchPedalPressed et le signal produit par la combinaison logique « BrakePedalPressed AND NeutralStateGearBox ». Dans le cas contraire, le signal Act. Exc., reste inactif (Act. Exc .= 0).

Le signal Unlocking indique une décondamnation des ouvrants du véhicule, le signal ApproachDetection : la détection d'une personne s'apprêtant à entrer dans le véhicule, le signal DoorAperture : l'ouverture d'une porte du véhicule, le signal DoorClosing : la fermeture d'une porte du véhicule, le signal ClutchPedalPressed : l'appui sur la pédale d'embrayage, le signal BrakePedalPressed : l'appui sur la pédale de frein, et le signal NeutralStateGearBox : la boîte de vitesse en position neutre.

Le contrôle sécurisé de la mise en fonction de l'onduleur 7 repose sur les mêmes principes que celui du circuit d'excitation 4.

Ces principes ont déjà été exposés, en liaison avec la Figure 2.

Dans le cas des systèmes micro-hybrides montrés sur les Figures 3a, 3b et 3c, l'organe de décision, c'est-à-dire le premier microprocesseur 17 agencé dans le second circuit de commande 25 des circuits de conversion d'énergie 12, acquiert des signaux d'information Capt. Véh. provenant de l'extérieur du système (sous forme filaire ou par l'intermédiaire du bus de données CAN), et utilise ces signaux pour générer une autorisation de mise à ON du mode moteur Auth. Ond. de la machine électrique 2.

Cette autorisation est transmise au premier circuit de commande 13 des circuits de puissance 14, comprenant l'onduleur 7, afin de valider le second signal de pilotage Pil. Ond..

De même que précédemment, le second microprocesseur 19 du circuit de commande 13 acquiert les demandes Dd. Ond. du premier microprocesseur 17 afin de générer un second signal de commande Cd. Ond. du mode moteur vers l'onduleur 7. De même que pour l'excitation, un processus de validation de l'ordre peut être mis en oeuvre afin d'empêcher la mise à ON de l'onduleur du fait d'une simple erreur du premier microprocesseur 17 agencé dans le second circuit de commande 25.

Comme précédemment, un tel processus de validation se réalise notamment par l'acquisition par le second microprocesseur 19 de signaux d'information provenant du bus de communication de données du véhicule CAN.

Le processus de validation peut revêtir plusieurs formes, notamment à titre d'exemple :
- La vérification de la cohérence entre la demande d'activation du mode moteur Dd. Ond. (démarreur ou assistance en couple) et vitesse véhicule et/ou moteur. (Chacune de ces fonctions ne peut être commandé que dans une certaine plage de vitesse véhicule et/ou moteur)
   Ou encore
- La vérification de la cohérence entre la demande d'activation du mode moteur Dd. Ond. (démarreur ou assistance en couple) et l'état de la chaîne de traction (chacune de ces fonctions ne peut être commandé qu'avec un état donné de la chaîne de traction)

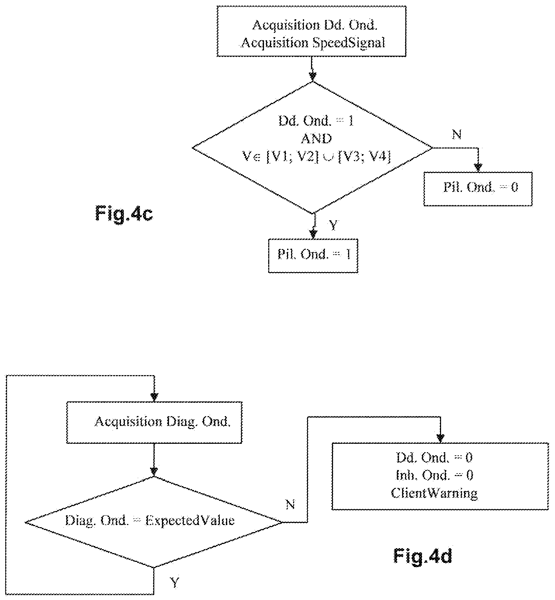

Le processus d'élaboration du signal de pilotage de l'onduleur Pil. Ond. au sein du second microprocesseur 19 est représenté à la Figure 4c dans laquelle les repères Y et N correspondent respectivement à « Oui » et « Non » et « AND » est la fonction logique « ET ».

Comme montré à la Figure 4c, l'état du signal Pil. Ond. est déterminé à partir du signal Dd. Ond. et d'un signal de vitesse signé SpeedSignal. Pour que le signal Pil. Ond. soit activé (Pil. Ond.=1), il faut que le signal Dd. Ond. de demande d'activation de l'onduleur soit activé et que la vitesse de rotation signée SpeedSignal de la machine électrique 5 soit dans une plage de vitesse déterminée, à savoir, par exemple, dans une plage composée [V1 ; V2] ∪ [V3 ; V4]. Lorsque la machine électrique tourne dans le sens de rotation requis, un signe positif + est par exemple affecté au signal SpeedSignal, le signe négatif - étant affecté dans le cas contraire. La plage [V1 ; V2] est une plage de vitesses positives et est la plage de vitesses liée au mode démarrage, avec V1=0 ce qui exclut toute activation de l'onduleur dans le cas où la machine électrique tournerait dans un sens de rotation inverse à celui requis. La plage [V3 ; V4] est aussi une plage de vitesses positives et correspond la plage de vitesses liée au mode d'assistance en couple.

En complément, aussi bien dans le cas du premier signal de commande Cd. Exc. du circuit d'excitation 4, que dans le cas du second signal de commande Cd. Ond. de l'onduleur 7, un diagnostic de l'activation des circuits de puissance 14 est effectué.

Ces signaux de diagnostic, Diag2. Ond. et, Diag2. Exc., permettent alors la mise en oeuvre d'une contre-mesure (c'est à dire d'une action immédiate dans le sens inverse de la commande) au sein du circuit de commande 13.

Cependant, un tel processus n'est pas suffisant pour couvrir l'ensemble des cas d'une activation intempestive de l'un des circuits de puissance 14 (driver du circuit d'excitation 4, ou driver 7 des enroulements de phases 5 de la machine électrique 2).

En effet, dans le cas où l'activation intempestive provient du second microprocesseur 19, on ne peut considérer cette contre-mesure comme valide : le second microprocesseur 19 qui a produit l'ordre intempestif ne peut être considéré comme pouvant réaliser convenablement la contre mesure.

C'est dans ce but que sont générés et transmis vers le premier microprocesseur 17 un premier signal de diagnostic Diag1. Ond., et un deuxième signal de diagnostic Diag1. Exc., dans le premier mode de réalisation préféré montré sur la Figure 3a, ou un troisième signal de diagnostic Diag3. Ond. et un deuxième signal de diagnostic Diag1. Exc, dans le deuxième mode de réalisation montré sur la Figure 3b, ou encore un premier signal de diagnostic Diag1. Ond., un troisième signal de diagnostic Diag3. Ond. et un deuxième signal de diagnostic Diag1. Exc, dans le troisième mode de réalisation montré sur la Figure 3c.

Afin de préserver le niveau de sécurité, ces signaux de diagnostics Diag1. Ond., Diag1. Exc. ou Diag3. Ond., sont transmis au premier microprocesseur 17 chacun au moyen, respectivement, de liaisons filaires dédiées, et sans faire appel à une quelconque mise en forme par le second microprocesseur 19 du circuit de commande 13.

Le but d'utiliser de telles liaisons dédiées est de laisser le premier microprocesseur 17 décoder les éventuelles défaillances; elles permettent de s'affranchir d'une défaillance du second microprocesseur 19, et elles permettent de transmettre l'information sans délai.

Un tel dispositif permet de diagnostiquer un mode moteur intempestif (démarrage-relance et/ou assistance en couple), et permet de s'affranchir de la dualité de la condition sur la ligne d'inhibition Auth. Ond..

La sécurisation par le premier signal de diagnostic Diag1. Ond. est réalisée de la manière suivante :
Après détection, le premier microprocesseur 17 inhibe le mode moteur en inhibant sa demande d'un tel mode Dd. Ond. et/ou en agissant de façon interne sur le premier circuit de décision 18 en logique câblée produisant le signal d'autorisation de mise en fonction du mode moteur Auth. Ond. par l'intermédiaire du signal interne Inh. Ond..

Le processus de surveillance du signal Diag1. Ond. au sein de organe de décision 17 est représenté à la Figure 4d dans laquelle les repères Y et N correspondent respectivement à « Oui » et « Non ».

Comme montré à la Figure 4d, lorsque le signal de diagnostic Diag. Ond. lu a bien une valeur attendue ExpectedValue, le processus fonctionne correctement et la boucle de surveillance se poursuit. La valeur attendue ExpectedValue est ici déterminée à partir d'informations fournies par les capteurs du véhicules.

Par contre, lorsqu'une différence apparaît entre la valeur attendue ExpectedValue et la valeur lue de Diag. Ond., selon les applications, le signal Dd. Ond. et/ou le signal Inh. Ond. peuvent être forcés à un état inactif (état 0) et/ou une alerte ClientWarning peut aussi éventuellement être transmise au dispositif client du processus.

Il est à noter que, comme énoncé précédemment, ce mécanisme n'empêche pas la commande intempestive, mais réduit très fortement le temps d'exposition au risque.

En complément, à tout ce processus, le premier microprocesseur 17 pourra informer ou demander d'informer le reste du véhicule (et donc le client) de la défaillance du système, et de la présence du risque. Cette information se réalisant à partir de la détection d'une valeur inattendue de l'un des signaux de diagnostic Diag1. Ond. ou Diag3. Ond.

De même, le second signal de diagnostic Diag1. Exc. permet de détecter, en fonction du schéma de l'onduleur, la fermeture du circuit d'excitation.

Les Figures 3a à 3c représentent le cas où ce second signal de diagnostic Diag1. Exc. est prélevé avant le driver de puissance du circuit d'excitation 4.

En variante, ce second signal de diagnostic Diag1. Exc. est avantageusement prélevé après le driver de puissance 4.

Les deux configurations présentent des avantages et inconvénients :
Dans la première configuration, le coût des composants nécessaires à la détection est faible, car il s'agit d'un signal de faible puissance, mais on n'a pas une image directe de l'état du driver.

Dans la seconde configuration, le coût de la détection est plus important, car il s'agit d'un signal de puissance qu'il faut véhiculer vers le premier microprocesseur 17, mais une mesure redondante du courant d'excitation est possible en même temps que la détection de la mise en fonction du driver de puissance 4.

La première configuration représentée sur les Figures 3a à 3c combine les contraintes coût et détection du risque, puisque ce diagnostic permet de détecter l'activation intempestive de l'excitation, ce qui revient en fait, en regard d'un démarrage et/ou d'une assistance en couple intempestive, à la perte d'une seule barrière de sécurité.

De même que pour l'activation intempestive du mode moteur, le premier microprocesseur 17 pourra informer ou demander d'informer le reste du véhicule (et donc le client) de la défaillance du système, et de la présence du risque. Cette information se réalisant à partir de la détection d'une valeur inattendue du signal de Diag1. Exc.

Le processus de surveillance du signal Diag1. Exc. au sein de l'organe de décision 17 est représenté à la Figure 4e, dans laquelle les repères Y et N correspondent respectivement à « Oui » et « Non ».

Comme montré à la Figure 4e, lorsque le signal de diagnostic Diag. Exc. lu a bien une valeur attendue ExpectedValue, le processus fonctionne correctement et la boucle de surveillance se poursuit. La valeur attendue ExpectedValue est déterminée à partir des informations issus des capteurs du véhicule et d'un signal de contact +APC / Vbat.

Par contre, lorsqu'une différence apparaît entre la valeur attendue ExpectedValue et la valeur lue de Diag. Exc., le signal d'activation Act. Exc. est désactivé (Act. Exc. = 0) et/ou, selon l'application, une alerte ClientWarning est transmise au dispositif client du processus.

On notera, en résumé, que le procédé et dispositif de contrôle sécurisé d'un système micro-hybride 1, selon l'invention, apporte de nouvelles barrières de sécurité supplémentaires par rapport à la seule barrière Auth. Ond. connue de l'état de la technique, représentée sur la Figure 2, à savoir :
- l'implémentation au sein du microprocesseur 19 du circuit de commande 13 des circuits de puissance 14 de stratégies d'évaluation ou de diagnostic des ordres donnés par le premier microprocesseur 17.
- l'implémentation au sein du second circuit de commande 25 d'un diagnostic de l'état activé de la machine électrique indépendant de l'état du microprocesseur 19 du circuit de commande 13.
- l'autorisation et la validation de l'excitation Auth. Exc;

Les différents signaux de contrôle et de diagnostic mis en oeuvre par l'invention sont réalisés, de préférence, de la manière suivante :
Dd. Ond. et Dd. Exc.

Ces premiers signaux de contrôle sont formés par le premier microprocesseur 17 (second circuit de commande 25) et transmis au moyen d'un réseau (privé ou public) vers le second microprocesseur 19 du circuit de commande 13 des circuits de puissance 14 (onduleur 7 et excitation 4).

Ces premiers signaux de contrôle sont de plus formés à partir de l'acquisition de différents capteurs véhicules (boite de vitesse, frein, vitesse, tension batterie et/ou stockeur, état portes ...) et reflètent l'état système demandé (Mode Alternateur ou Régénérateur (Excitation = Etat Activé, Onduleur = Etat Désactivé) ; Mode Idle_Stop ou Délestage_Alternateur (Excitation = Etat Désactivé, Onduleur = Etat Désactivé), Mode Moteur (Excitation = Etat Activé, Onduleur = Etat Activé)).

En retour, le second microprocesseur 19 renvoie (au moyen du même réseau) vers le premier microprocesseur 17 des signaux d'état (mode Alternateur, Régénérateur...), ainsi que des informations concernant ses défauts internes et modes et/ou transitions refusées (signaux d'état et défaut Etats/Défauts).

Les transitions refusées signalées sont, notamment :
- le refus du passage en mode générateur ou moteur du fait de la présence d'une incohérence entre l'information +APC reçue par le circuit de commande 13 et la demande émanant du premier microprocesseur 17 ;
- le refus du passage en mode moteur du fait de la présence d'une incohérence entre la demande émanant du premier microprocesseur 17 et la vitesse véhicule et/ou moteur (vitesse hors plage autorisée).

### Auth. Exc.

Comme décrit précédemment, ce second signal de contrôle est réalisé de préférence à partir d'un signal de contact +APC ou Vbat par la commutation d'un circuit de type SMART MOS 23 par le premier microprocesseur 17 (en fonction de la stratégie implémentée dans cet organe).

### Diag1. Ond.

Ce premier signal de diagnostic est réalisé, de préférence, à partir du signal issu du capteur de position 8 de la machine électrique 2.

Ce signal est décodé par le premier microprocesseur 17 de la même manière que par le second microprocesseur 19 du circuit de commande 13 des circuits de puissance 14 comprenant l'onduleur 7, dans le premier mode de réalisation préféré de l'invention montré sur la Figure 3a.

Dans une tel cas, le premier microprocesseur 17 reçoit et utilise les premiers signaux d'information Capt. Véh. provenant du véhicule afin de ne prendre en compte ce premier de diagnostic que dans certains contextes.

A titre d'exemples, on peut citer :
- la mise à ON d'un starter additionnel (pour éviter de détecter « intempestivement » le démarrage réalisé par ce moyen) ;
- la présence d'une vitesse véhicule (pour éviter de détecter « intempestivement » le démarrage à la poussette réalisé volontairement par le client) ;
- l'estimation du couple réalisé par le reste du véhicule (pour éviter de détecter « intempestivement » une variation assistance en couple réalisée normalement à l'extérieur du système (moteur)) ;

En variante, un autre signal de diagnostic de ce type est réalisé à partir de tout signal pouvant être image de l'activation du mode moteur au niveau de la machine électrique 2, et il se substitue alors au premier signal de diagnostic Diag1. Ond. traité par les premier et second microprocesseurs 17,19.

Les deuxième et troisième modes de réalisation préférés de l'invention, montrés sur les Figures 3b et 3c, mettent en oeuvre cette variante.

La mesure différentielle de la tension du stockeur d'énergie 9 constitue un troisième signal de diagnostic Diag3. Ond., notamment pour sécuriser le mode « assistance en couple », puisque l'activation de l'assistance en couple implique l'utilisation de la tension stockée, et donc sa décroissance.

Dans une telle hypothèse, et de la même manière que précédemment en ce qui concerne la rotation de la machine 2, le premier microprocesseur 17, c'est-à-dire le second circuit de commande 25 des circuits de conversion d'énergie 12, devra recevoir une estimation de la puissance prélevée par les charges du réseau Vbat+X (si elles existent) de façon à ne pas prendre en compte dans le diagnostic cette puissance utilisée par ailleurs.

Dans le deuxième mode de réalisation préféré montré sur la Figure 3b, le premier microprocesseur 17 n'utilise pas le premier signal de diagnostic Diag1. Ond., mais à la place le troisième signal de diagnostic Diag3. Ond..

Il est à noter que cette variante de réalisation est tout particulièrement intéressante dans le cas où l'on réalise la combinaison du stockeur d'énergie 9 et du convertisseur continu-continu 12 dans un même organe de puissance. En effet, dans ce cas, tous les signaux cités sont des signaux internes, et il n'est pas nécessaire d'avoir de lignes supplémentaires.

### Diag1. Exc.

Ce deuxième signal de diagnostic Diag1. Exc. peut être réalisé au moyen d'un circuit à diode (diode et résistance d'adaptation).

### Diag2. Ond. et Diag2. Exc.

Ces signaux de diagnostic sont câblés au niveau de l'électronique des circuits de puissance 14 (onduleur 7 et circuit d'excitation 4). Ce sont de simples adaptations de signaux afin d'être « réinjectées » dans le second microprocesseur 19 du circuit de commande 13 des circuits de puissance 14 (éventuellement sur des entrées numériques).

### Auth. Ond.

Un circuit à transistor 18 (portes logiques) prend en compte le passage d'un signal d'entrée provenant d'un des capteurs du véhicule Capt. Véh. (capteur de la boite de vitesse, par exemple) à une valeur invalide, et le signal d'inhibition Inh. Ond. provenant du premier microprocesseur 17 pour générer ce signal de contrôle.

### Inh. Ond.

Ce signal de contrôle est généré, comme indiqué précédemment, par le premier microprocesseur 17 au moment de la détection du premier signal de diagnostic Diag1.Ond..

Les avantages de l'architecture décrite ci-dessus, en liaison avec les Figures 3a, 3b et 3c, sont que :
- le nombre d'entrées/sorties nécessaires au fonctionnement sécurisé du système micro-hybride 1 est minimisé;
- le circuit de commande 13 n'a pas à supporter la totalité de l'interface avec l'extérieur du système ;
- la mise en oeuvre d'un microprocesseur supplémentaire est évitée : le premier microprocesseur 17 utilisé est déjà présent dans le second circuit de commande 25 des circuits de conversion d'énergie12.

Il est encore à remarquer qu'aucune entrée/sortie du système micro-hybride à freinage récupératif et/ou assistance en couple n'est spécifique à l'une de ces fonctionnalités.

Comme il va de soi, l'invention ne se limite pas aux seuls modes d'exécution préférentiels décrits ci-dessus.

L'invention embrasse donc au contraire toutes les variantes possibles de réalisation qui resteraient dans le cadre défini par les revendications ci-après.

## Revendications

1. Procédé de contrôle sécurisé d'un système à alterno-démarreur (1) pour véhicule, notamment de type micro-hybride, ledit véhicule comportant au moins une unité de contrôle électronique (15), des capteurs véhicule, un bus de communication de données (16) et un réseau électrique de bord, ledit système micro-hybride (1) comportant au moins une machine électrique tournante (2) munie d'un moyen de détection de rotation (8), des circuits de puissance (14) comportant au moins un onduleur (7) et un circuit d'excitation (4) alimentant ladite machine électrique tournante (2), et un redresseur (11) alimenté par ladite machine électrique tournante (2), des circuits de conversion d'énergie (12) reliés à un moyen de stockage d'énergie (9) alimenté par ledit redresseur (11), un premier circuit de commande (13) desdits circuits de puissance (14), et un second circuit de commande (25) desdits circuits de conversion d'énergie (12), ledit procédé consistant à:
- générer des signaux de contrôle (Dd. Exc., Dd. Ond., Auth. Exc., Auth. Ond) dudit système (1) à partir de premiers signaux d'information (Capt. Véh.) représentatifs d'un état de fonctionnement dudit véhicule provenant desdits capteurs véhicule; **caractérisé en ce que** l'on génère au moyen dudit premier circuit de commande (13) des signaux de commande (Cd. Exc., Cd. Ond.) desdits circuits de puissance (14) à partir de signaux de diagnostic (Diag2. Exc., Diag2. Ond.) représentatifs d'un état de fonctionnement dudit système; et que l'on génère en outre lesdits signaux de contrôle (Dd. Exc., Dd. Ond., Auth. Exc., Auth. Ond) au moyen dudit second circuit de commande (25) sous le contrôle de ladite unité de contrôle électronique (15).

2. Procédé de contrôle sécurisé d'un système à alterno-démarreur (1), notamment de type micro-hybride, selon la revendication 1, **caractérisé en ce que** l'on génère en outre lesdits signaux de commande (Cd. Ond., Cd. Exc.) au moyen dudit premier circuit de commande (13) à partir de plus de seconds signaux d'information (CAN) provenant dudit bus de communication de données (16).

3. Procédé de contrôle sécurisé d'un système à alterno-démarreur (1), notamment de type micro-hybride, selon l'une quelconque des revendications 1 à 2 précédentes, **caractérisé en ce que** l'on génère en outre lesdits signaux de contrôle (Dd. Exc., Dd. Ond., Auth. Exc., Auth. Ond) à partir d'au moins un premier signal de diagnostic (Diag1. Ond., Diag1. Exc.) parmi lesdits signaux de diagnostic (Diag1. Ond., Diag1. Exc., Diag2. Ond., Diag2. Exc.).

4. Procédé de contrôle sécurisé d'un système à alterno-démarreur (1), notamment de type micro-hybride, selon l'une quelconque des revendications 1 ou 2 précédentes, **caractérisé en ce que** l'on génère en outre lesdits signaux de commande (Cd. Ond., Cd. Exc.) au moyen dudit premier circuit de commande (13) à partir de plus d'un premier signal de diagnostic (Diag1. Ond.) parmi lesdits signaux de diagnostic (Diag1. Ond., Diag1. Exc., Diag2. Ond., Diag2. Exc.).

5. Procédé de contrôle sécurisé d'un système à alterno-démarreur (1), notamment de type micro-hybride, selon l'une quelconque des revendications 3 ou 4 précédentes, **caractérisé en ce qu'**au moins un premier signal de commande (Cd. Exc.) parmi lesdits signaux de commande (Cd. Ond., Cd. Exc.) constitue au moins un deuxième signal de diagnostic (Diag1. Exc.) parmi lesdits signaux de diagnostic (Diag1. Ond., Diag1. Exc., Diag2. Ond., Diag2. Exc.).

6. Procédé de contrôle sécurisé d'un système à alterno-démarreur (1), notamment de type micro-hybride, selon la revendication 5 précédente, **caractérisé en ce que** l'on génère en outre lesdits signaux de contrôle (Dd. Exc., Dd. Ond., Auth. Exc., Auth. Ond) et/ ou lesdits signaux de commande (Cd. Ond., Cd. Exc.) à partir de plus d'un troisième signal de diagnostic (Diag3. Ond) représentatif d'un niveau de tension à une sortie dudit redresseur (11).

7. Procédé de contrôle sécurisé d'un système à alterno-démarreur (1), notamment de type micro-hybride, selon l'une quelconque des revendications 3 à 6 précédentes, **caractérisé en ce qu'**il consiste en outre à :
- générer au moins un premier signal de contrôle (Dd. Ond., Dd. Exc.) parmi lesdits signaux de contrôle (Dd. Exc., Dd. Ond., Auth. Exc., Auth. Ond.) au moyen d'un premier microprocesseur (17) agencé dans ledit second circuit de commande (25) traitant au moins ledit premier signal de diagnostic (Diag1. Ond.) ou ledit deuxième signal de diagnostic (Diag1. Exc.) ou ledit troisième signal de diagnostic (Diag3. Ond);
- générer au moins un second signal de contrôle (Auth. Exc.) parmi lesdits signaux de contrôle (Dd. Exc. , Dd. Ond. , Auth. Exc., Auth. Ond.) au moyen d'un premier circuit de décision (23) en logique câblée agencé dans ledit second circuit de commande (25);
- générer lesdits signaux de commande (Cd. Ond., Cd. Exc.) au moyen exclusivement d'un deuxième circuit de décision (22,24) en logique câblée agencé dans ledit premier circuit de commande (13).

8. Procédé de contrôle sécurisé d'un système à alterno-démarreur (1), notamment de type micro-hybride, selon la revendication 7 précédente, **caractérisé en ce qu'**il consiste en outre à :
- générer ledit au moins second signal de contrôle (Auth. Exc.) en fonction d'au moins un premier signal d'activation (Act. Exc.) parmi des signaux d'activation et/ou d'inhibition (Act. Exc., Inh. Ond.) générés par ledit premier microprocesseur (17) et d'un signal de contact (+APC/ Vbat) représentatif de la mise sous tension dudit réseau électrique de bord ;
- générer ledit au moins premier signal de commande (Cd. Exc.) en fonction dudit au moins second signal de contrôle (Auth. Exc.) et d'au moins un premier signal de pilotage (Pil. Exc.) parmi des signaux de pilotage (Pil. Ond., Pil. Exc.) générés par un second microprocesseur (19) agencé dans ledit premier circuit de commande (13).

9. Procédé de contrôle sécurisé d'un système à alterno-démarreur (1), notamment de type micro-hybride, selon la revendication 8 précédente, **caractérisé en ce qu'**il consiste en outre à transmettre des signaux d'état/défaut (Etats/Défauts) au moyen dudit second microprocesseur (19) vers ledit premier microprocesseur (17).

10. Procédé de contrôle sécurisé d'un système micro-hybride (1) selon l'une quelconque des revendications 5 ou 6 précédentes, **caractérisé en ce que** l'on commande ledit circuit d'excitation (4) par ledit premier signal de commande (Cd. Exc.).

11. Procédé de contrôle sécurisé d'un système à alterno-démarreur (1), notamment de type micro-hybride, selon l'une quelconque des revendications 3 à 10 précédentes, **caractérisé en ce que** ledit premier signal de diagnostic (Diag1. Ond.) est fourni par ledit moyen de détection de rotation (8).

12. Procédé de contrôle sécurisé d'un système à alterno-démarreur (1), notamment de type micro-hybride, selon l'une quelconque des revendications 1 à 11 précédentes, **caractérisé en ce que** au moins un signal de pilotage (Pil. Ond.) parmi des signaux de pilotage (Pil. Ond., Pil. Exc.) générés dans ledit premier circuit de commande (13) est forcé à un état inactif (Pil. Ond. = 0) lorsque une vitesse de rotation signée (SpeedSignal) de ladite machine électrique tournante est à l'extérieur d'une plage de vitesse prédéterminée ([V1 ; V2] ∪ [V1 ; V2]).

13. Dispositif de contrôle sécurisé d'un système à alterno-démarreur (1), notamment de type micro-hybride, adapté à la mise en ouvre du procédé selon l'une quelconque des revendications 1 à 12 précédentes, ledit véhicule comportant au moins une unité de contrôle électronique (15), des capteurs véhicule, un bus de communication de données (16) et un réseau électrique de bord, ledit système micro-hybride (1) comportant au moins une machine électrique tournante (2) munie d'un moyen de détection de rotation (8), des circuits de puissance (14) comportant au moins un onduleur (7) et un circuit d'excitation (4) alimentant ladite machine électrique tournante (2), et un redresseur (11) alimenté par ladite machine électrique tournante (2), des circuits de conversion d'énergie (12) reliés à un moyen de stockage d'énergie (9) alimenté par ledit redresseur (11), un premier circuit de commande (13) desdits circuits de puissance (14), et un second circuit de commande (25) desdits circuits de conversion d'énergie (12), ledit dispositif étant du type de ceux où:
- des signaux de contrôle (Dd. Exc., Dd. Ond., Auth. Exc., Auth. Ond.) dudit système (1) sont générés à partir de premiers signaux d'information (Capt. Véh.) représentatifs d'un état de fonctionnement dudit véhicule provenant desdits capteurs véhicule **caractérisé en ce que** ;
- ledit premier circuit de commande (13) reçoit des signaux de diagnostic (Diag2. Exc., Diag2. Ond.) représentatifs d'un état de fonctionnement dudit système (1) et génère des signaux de commande (Cd. Exc., Cd. Ond.) desdits circuits de puissance (14) ; et que ledit second circuit de commande (25) interfacé avec ladite unité de contrôle (15) génère lesdits signaux de contrôle (Dd. Exc., Dd. Ond., Auth. Exc., Auth. Ond.).

14. Dispositif de contrôle sécurisé d'un système à alterno-démarreur (1), notamment de type micro-hybride, selon la revendication 13 précédente, **caractérisé en ce que** ledit premier circuit de commande (13) génère en outre lesdits signaux de commande (Cd. Ond., Cd. Exc.) à partir de plus de seconds signaux d'information (CAN) provenant dudit bus de communication de données (16).

15. Dispositif de contrôle sécurisé d'un système à alterno-démarreur (1), notamment de type micro-hybride, selon l'une quelconque des revendications 13 ou 14 précédentes, **caractérisé en ce que** le premier circuit de commande (13) génère en outre lesdits signaux de commande (Cd. Ond., Cd. Exc.) à partir de plus d'un premier signal de diagnostic (Diag1. Ond.) parmi lesdits signaux de diagnostic (Diag1. Ond., Diag1. Exc., Diag2. Ond., Diag2. Exc.).

16. Dispositif de contrôle sécurisé d'un système à alterno-démarreur (1), notamment de type micro-hybride, selon l'une quelconque des revendications 14 ou 15 précédentes, **caractérisé en ce qu'**au moins un premier signal de commande (Cd. Exc.) parmi lesdits signaux de commande (Cd. Ond., Cd. Exc.) constitue au moins un deuxième signa! de diagnostic (Diag1. Exc.) parmi lesdits signaux de diagnostic (Diag1. Ond., Diag1. Exc., Diag2. Ond., Diag2. Exc.).

17. Dispositif de contrôle sécurisé d'un système à alterno-démarreur (1), notamment de type micro-hybride, selon la revendication 16 précédente, **caractérisé en ce que** lesdits signaux de diagnostic (Diag1. Ond., Diag1. Exc., Diag2. Ond., Diag2. Exc.) comprennent un troisième signal de diagnostic (Diag3. Ond) représentatif d'un niveau de tension à une sortie dudit redresseur (11).

18. Dispositif de contrôle sécurisé d'un système à alterno-démarreur (1), notamment de type micro-hybride, selon l'une quelconque des revendications 15 à 17 précédentes, **caractérisé en ce qu'**il comprend en outre :
- un premier microprocesseur (17) agencé dans ledit second circuit de commande (25) traitant au moins ledit premier signal de diagnostic (Diag1. Ond.) ou ledit deuxième signal de diagnostic (Diag1. Exc.) ou ledit troisième signal de diagnostic (Diag3. Ond) et générant au moins un premier signal de contrôle (Dd. Ond., Dd. Exc.) parmi lesdits signaux de contrôle (Dd. Exc., Dd. Ond., Auth. Exc., Auth. Ond.);
- un premier circuit de décision (23) en logique câblée agencé dans ledit second circuit de commande (25), et générant au moins un second signal de contrôle (Auth. Exc.) parmi lesdits signaux de contrôle (Dd. Exc. , Dd. Ond. , Auth. Exc., Auth. Ond.)';
- un deuxième circuit de décision (22,24) en logique câblée agencé dans ledit premier circuit de commande (13), et générant lesdits signaux de commande (Cd. Ond., Cd. Exc.).

19. Dispositif de contrôle sécurisé d'un système à alterno-démarreur (1), notamment de type micro-hybride, selon la revendication 18 précédente, **caractérisé en ce qu'**il comprend de plus :
- une première porte logique (23) produisant ledit au moins second signal de contrôle (Auth. Exc.) en fonction d'au moins un premier signal d'activation (Act. Exc.) parmi des signaux d'activation et/ou d'inhibition (Act. Exc., Inh. Ond.) générés par ledit premier microprocesseur (17) et d'un signal de contact (+APC/ Vbat) représentatif de la mise sous tension dudit réseau électrique de bord ;
- un second microprocesseur (19) agencé dans ledit premier circuit de commande (13) et générant des signaux de pilotage (Pil. Ond., Pil. Exc.) ;
- une deuxième porte logique (24) générant ledit au moins premier signal de commande (Cd. Exc.) en fonction dudit au moins second signal de contrôle (Auth. Exc.) et d'au moins un premier signal de pilotage (Pil. Exc.) parmi lesdits signaux de pilotage (Pil. Ond., Pil. Exc.).

20. Dispositif de contrôle sécurisé d'un système à alterno-démarreur (1), notamment de type micro-hybride, selon la revendication 19 précédente, **caractérisé en ce que** ledit second microprocesseur (19) transmet des signaux d'état/défaut (Etats/Défauts) vers ledit premier microprocesseur (17).

21. Dispositif de contrôle sécurisé d'un système à alterno-démarreur (1), notamment de type micro-hybride, selon l'une quelconque des revendications 16 ou 17 précédentes, **caractérisé en ce que** ledit premier signal de commande (Cd. Exc.) commande ledit circuit d'excitation (4).

22. Dispositif de contrôle sécurisé d'un système à alterno-démarreur (1), notamment de type micro-hybride, selon la revendication 15 précédente, **caractérisé en ce que** ledit premier signal de diagnostic (Diag1. Ond.) est fourni par ledit moyen de détection de rotation (8).

23. Système à alterno-démarreur (1), notamment de type micro-hybride, comprenant le dispositif de contrôle sécurisé selon l'une quelconque des revendications 13 à 22 précédentes.

24. Système à alterno-démarreur (1), notamment de type micro-hybride, selon la revendication 23 comprenant de plus une fonction de freinage récupératif.

## Patentansprüche

1. Verfahren für die Sicherheitskontrolle eines Generator-/Anlassersystems (1) für ein Fahrzeug insbesondere mikro-hybriden Typs, wobei das Fahrzeug mindestens eine elektronische Kontrolleinheit (15), Fahrzeugsensoren, einen Datenkommunikationsbus (16) und ein elektrisches Bordnetz umfasst, wobei das Mikro-Hybridsystem (1) mindestens eine drehende elektrische Maschine (2), die mit einem Rotationserfassungssystem (8) versehen ist, Leistungsschaltungen (14), die mindestens einen Wechselrichter (7) und eine Erregungsschaltung (4), die die drehende elektrische Maschine (2) versorgt, umfassen, und einen Gleichrichter (11), der von der drehenden elektrischen Maschine (2) versorgt wird, Energieumwandlungsschaltungen (12), die mit einem Energiespeichermittel (9) verbunden sind, das von dem Gleichrichter (11) versorgt wird, eine erste Steuerschaltung (13) der Leistungsschaltungen (14) und eine zweite Steuerschaltung (25) der Energieumwandlungsschaltungen (12) umfasst, wobei das Verfahren darin besteht:
- Kontrollsignale (Dd.Exc., Dd.Ond., Auth.Exc., Auth.Ond) des Systems (1) aus ersten Informationssignalen (Capt.Veh.), die für einen Betriebszustand des Fahrzeugs, der von den Fahrzeugsensoren angezeigt wird, repräsentativ sind, zu erzeugen;
**dadurch gekennzeichnet, dass** mit Hilfe der ersten Steuerschaltung (13) Steuersignale (Cd.Exc., Cd.Ond.) der Leistungsschaltungen (14) auf Basis von Diagnosesignalen (Diag2.Exc., Diag2.Ond.), die für einen Betriebszustand des Systems repräsentativ sind, erzeugt werden;
und dass ferner die Kontrollsignale (Dd.Exc., Dd.Ond., Auth.Exc., Auth.Ond) mit Hilfe der zweiten Steuerschaltung (25) unter der Kontrolle der elektronischen Kontrolleinheit (15) erzeugt werden.

2. Verfahren für die Sicherheitskontrolle eines Generator-/Anlassersystems (1), insbesondere mikro-hybriden Typs, nach Anspruch 1, **dadurch gekennzeichnet, dass** ferner die Steuersignale (Cd.Ond., Cd.Exc.) mit Hilfe der ersten Steuerschaltung (13) aus mehr als zweiten Informationssignalen (CAN), die von dem Datenkommunikationsbus (16) stammen, erzeugt werden.

3. Verfahren für die Sicherheitskontrolle eines Generator-/Anlassersystems (1), insbesondere mikro-hybriden Typs, nach einem der vorhergehenden Ansprüche 1 bis 2, **dadurch gekennzeichnet, dass** ferner die Kontrollsignale (Dd.Exc., Dd.Ond., Auth.Exc., Auth.Ond) auf Basis mindestens eines Diagnosesignals (Diag1.Ond., Diag1.Exc.) unter den Diagnosesignalen (Diag1.Ond., Diag1.Exc., Diag2Ond., Diag2.Exc.) erzeugt werden.

4. Verfahren für die Sicherheitskontrolle eines Generator-/Anlassersystems (1), insbesondere mikro-hybriden Typs, nach einem der vorhergehenden Ansprüche 1 oder 2, **dadurch gekennzeichnet, dass** ferner die Steuersignale (Cd.Ond., Cd.Exc.) mit Hilfe der ersten Steuerschaltung (13) auf Basis von mehr als einem ersten Diagnosesignal (Diag1.Ond.) unter den Diagnosesignalen (Diag1.Ond., Diag1.Exc., Diag2.Ond., Diag2.Exc.) erzeugt werden.

5. Verfahren für die Sicherheitskontrolle eines Generator-/Anlassersystems (1), insbesondere mikro-hybriden Typs, nach einem der vorhergehenden Ansprüche 3 oder 4, **dadurch gekennzeichnet, dass** mindestens ein erstes Steuersignal (Cd.Exc.) unter den Steuersignalen (Cd.Ond., Cd.Exc.) mindestens ein zweites Diagnosesignal (Diag1.Exc.) unter den Diagnosesignalen (Diag1.Ond., Diag1.Exc., Diag2.Ond., Diag2.Exc.) darstellt.

6. Verfahren für die Sicherheitskontrolle eines Generator-/Anlassersystems (1), insbesondere mikro-hybriden Typs, nach dem vorhergehenden Anspruch 5, **dadurch gekennzeichnet, dass** ferner die Kontrollsignale (Dd.Exc., Dd.Ond., Auth.Exc., Auth.Ond.) und/oder die Steuersignale (Cd.Ond., Cd.Exc.) aus mehr als einem dritten Diagnosesignal (Diag3.Ond.), das für ein Spannungsniveau an einem Ausgang des Gleichrichters (11) repräsentativ ist, erzeugt werden.

7. Verfahren für die Sicherheitskontrolle eines Generator-/Anlassersystems (1), insbesondere mikro-hybriden Typs, nach einem der vorhergehenden Ansprüche 3 bis 6, **dadurch gekennzeichnet, dass** es ferner darin besteht:
- mindestens ein erstes Kontrollsignal (Dd.Ond., Dd.Exc.) unter den Kontrollsignalen (Dd.Exc., Dd.Ond., Auth.Exc., Auth.Ond.) mit Hilfe eines ersten Mikroprozessors (17) zu erzeugen, der in der zweiten Steuerschaltung (25) angeordnet ist, der mindestens das erste Diagnosesignal (Diag1.Ond.) oder das zweite Diagnosesignal (Diag1.Exc.) oder das dritte Diagnosesignal (Diag3.Ond) bearbeitet;
- mindestens ein zweites Kontrollsignal (Auth.Exc.) unter den Kontrollsignalen (Dd.Exc., Dd.Ond., Auth.Exc., Auth.Ond.) mit Hilfe einer ersten Entscheidungsschaltung (23) in verkabelter Logik zu erzeugen, die in der zweiten Steuerschaltung (25) angeordnet ist;
- die Steuersignale (Cd.Ond., Cd.Exc.) ausschließlich mit Hilfe einer zweiten Entscheidungsschaltung (22, 24) in verkabelter Logik zu erzeugen, die in der ersten Steuerschaltung (13) angeordnet ist.

8. Verfahren für die Sicherheitskontrolle eines Generator-/Anlassersystems (1), insbesondere mikro-hybriden Typs, nach dem vorhergehenden Anspruch 7, **dadurch gekennzeichnet, dass** es ferner darin besteht:
- das mindestens zweite Kontrollsignal (Auth.Exc.) in Abhängigkeit von mindestens einem ersten Aktivierungssignal (Act.Exc.) unter Aktivierungs- und/oder Verhinderungssignalen (Act.Exc., Inh.Ond.), die von dem ersten Mikroprozessor (17) erzeugt werden, und von einem Kontaktsignal (+APC/Vbat) zu erzeugen, das für die Unterspannungsetzung des elektrischen Bordnetzes repräsentativ ist;
- das mindestens erste Steuersignal (Cd.Exc.) in Abhängigkeit von dem mindestens zweiten Kontrollsignal (Auth.Exc.) und mindestens einem ersten Antriebssignal (Pil.Exc.) unter Antriebssignalen (Pil.Ond., Pil.Exc.) zu erzeugen, die von einem zweiten Mikroprozessor (19) erzeugt werden, der in der ersten Steuerschaltung (13) angeordnet ist.

9. Verfahren für die Sicherheitskontrolle eines Generator-/Anlassersystems (1), insbesondere mikro-hybriden Typs, nach dem vorhergehenden Anspruch 8, **dadurch gekennzeichnet, dass** es ferner darin besteht, Zustands-/Fehlersignale (Zustände/Fehler) mit Hilfe des zweiten Mikroprozessors (19) zum ersten Mikroprozessor (17) zu übertragen.

10. Verfahren für die Sicherheitskontrolle eines Mikro-Hybridsystems (1) nach einem der vorhergehenden Ansprüche 5 oder 6, **dadurch gekennzeichnet, dass** die Erregungsschaltung (4) durch das erste Steuersignal (Cd.Exc.) gesteuert wird.

11. Verfahren für die Sicherheitskontrolle eines Generator-/Anlassersystems (1), insbesondere mikro-hybriden Typs, nach einem der vorhergehenden Ansprüche 3 bis 10, **dadurch gekennzeichnet, dass** das erste Diagnosesignal (Diag1.Ond.) von dem Rotationserfassungssystem (8) geliefert wird.

12. Verfahren für die Sicherheitskontrolle eines Generator-/Anlassersystems (1), insbesondere mikro-hybriden Typs, nach einem der vorhergehenden Ansprüche 1 bis 11, **dadurch gekennzeichnet, dass** mindestens ein Antriebssignal (Pil.Ond.) unter Antriebssignalen (Pil.Ond., Pil.Exc.), die in der ersten Steuerschaltung (13) erzeugt werden, in einen inaktiven Zustand (Pil.Ond.=0) gebracht wird, wenn eine angezeigte Rotationsgeschwindigkeit (SpeedSignal) der drehenden elektrischen Maschine außerhalb eines vorbestimmten Geschwindigkeitsbereichs ([V1; V2]∪[V1; V2]) liegt.

13. Vorrichtung für die Sicherheitskontrolle eines Generator-/Anlassersystems (1), insbesondere mikro-hybriden Typs, angepasst an die Umsetzung des Verfahrens nach einem der vorhergehenden Ansprüche 1 bis 12, wobei das Fahrzeug mindestens eine elektronische Kontrolleinheit (15), Fahrzeugsensoren, einen Datenkommunikationsbus (16) und ein elektrisches Bordnetz umfasst, wobei das Mikro-Hybridsystem (1) mindestens eine drehende elektrische Maschine (2), die mit einem Rotationserfassungssystem (8) versehen ist, Leistungsschaltungen (14), die mindestens einen Wechselrichter (7) und eine Erregungsschaltung (4), die die drehende elektrische Maschine (2) versorgt, umfassen, und einen Gleichrichter (11), der von der drehenden elektrischen Maschine (2) versorgt wird, Energieumwandlungsschaltungen (12), die mit einem Energiespeichermittel (9) verbunden sind, das von dem Gleichrichter (11) versorgt wird, eine erste Steuerschaltung (13) der Leistungsschaltungen (14) und eine zweite Steuerschaltung (25) der Energieumwandlungsschaltungen (12) umfasst, wobei die Vorrichtung vom Typ jener ist, bei denen:
- Kontrollsignale (Dd.Exc., Dd.Ond., Auth.Exc., Auth.Ond.) des Systems (1) aus ersten Informationssignalen (Capt.Veh.), die für einen Betriebszustand des Fahrzeugs, der von den Fahrzeugsensoren angezeigt wird, repräsentativ sind, erzeugt werden;
**dadurch gekennzeichnet, dass**:
- die erste Steuerschaltung (13) Diagnosesignale (Diag2.Exc., Diag2.Ond.) empfängt, die für einen Betriebszustand des Systems (1) repräsentativ sind, und Steuersignale (Cd.Exc., Cd.Ond.) der Leistungsschaltungen (14) erzeugt;
und dass die Steuerschaltung (25), die eine Schnittstelle mit der Kontrolleinheit (15) aufweist, die Kontrollsignale (Dd.Exc., Dd.Ond., Auth.Exc., Auth.Ond.) erzeugt.

14. Vorrichtung für die Sicherheitskontrolle eines Generator-/Anlassersystems (1), insbesondere mikro-hybriden Typs, nach dem vorhergehenden Anspruch 13, **dadurch gekennzeichnet, dass** die erste Steuerschaltung (13) ferner die Steuersignale (Cd.Ond., Cd.Exc.) auf Basis von mehr als zweiten Informationssignalen (CAN), die von dem Datenkommunikationsbus (16) stammen, erzeugt.

15. Vorrichtung für die Sicherheitskontrolle eines Generator-/Anlassersystems (1), insbesondere mikro-hybriden Typs, nach einem der vorhergehenden Ansprüche 13 oder 14, **dadurch gekennzeichnet, dass** die erste Steuerschaltung (13) ferner die Steuersignale (Cd.Ond., Cd.Exc.) auf Basis von mehr als einem ersten Diagnosesignal (Diag1.Ond.) unter den Diagnosesignalen (Diag1.Ond., Diag1.Exc., Diag2.Ond., Diag2.Exc.) erzeugt.

16. Vorrichtung für die Sicherheitskontrolle eines Generator-/Anlassersystems (1), insbesondere mikro-hybriden Typs, nach einem der vorhergehenden Ansprüche 14 oder 15, **dadurch gekennzeichnet, dass** mindestens ein erstes Steuersignal (Cd.Exc.) unter den Steuersignalen (Cd.Ond., Dc.Exc.) mindestens ein zweites Diagnosesignal (Diag1.Exc.) unter den Diagnosesignalen (Diag1.Ond., Diag1.Exc., Diag2.Ond., Diag2.Exc.) darstellt.

17. Vorrichtung für die Sicherheitskontrolle eines Generator-/Anlassersystems (1), insbesondere mikro-hybriden Typs, nach dem vorhergehenden Anspruch 16, **dadurch gekennzeichnet, dass** die Diagnosesignale (Diag1.Ond., Diag1.Exc., Diag2.Ond., Diag2.Exc.) ein drittes Diagnosesignal (Diag3.Ond) umfassen, das für ein Spannungsniveau an einem Ausgang des Gleichrichters (11) repräsentativ ist.

18. Vorrichtung für die Sicherheitskontrolle eines Generator-/Anlassersystems (1), insbesondere mikro-hybriden Typs, nach einem der vorhergehenden Ansprüche 15 bis 17, **dadurch gekennzeichnet, dass** sie ferner umfasst:
- einen ersten Mikroprozessor (17), der in der zweiten Steuerschaltung (25) angeordnet ist und mindestens das erste Diagnosesignal (Diag1.Ond.) oder das zweite Diagnosesignal (Diag1.Exc.) oder das dritte Diagnosesignal (Diag3.Ond) bearbeitet und mindestens ein erstes Kontrollsignal (Dd.Ond., Dd.Exc.) unter den Kontrollsignalen (Dd.Exc., Dd.Ond., Auth.Exc., Auth.Ond.) erzeugt;
- eine erste Entscheidungsschaltung (23) in verkabelter Logik, die in der zweiten Steuerschaltung (25) angeordnet ist und mindestens ein zweites Kontrollsignal (Auth.Exc.) unter den Kontrollsignalen (Dd.Exc., Dd.Ond., Auth.Exc., Auth.Ond.) erzeugt;
- eine zweite Entscheidungsschaltung (22, 24) in verkabelter Logik, die in der ersten Steuerschaltung (13) angeordnet ist und die Steuersignale (Cd.Ond., Cd.Exc.) erzeugt.

19. Vorrichtung für die Sicherheitskontrolle eines Generator-/Anlassersystems (1), insbesondere mikro-hybriden Typs, nach dem vorhergehenden Anspruch 18, **dadurch gekennzeichnet, dass** sie ferner umfasst:
- ein erstes logisches Gatter (23), das das mindestens zweite Kontrollsignal (Auth.Exc.) in Abhängigkeit von mindestens einem ersten Aktivierungssignal (Act.Exc.) unter Aktivierungs- und/oder Verhinderungssignalen (Act.Exc., Inh.Ond.), die von dem ersten Mikroprozessor (17) erzeugt werden, und von einem Kontaktsignal (+APC/Vbat) erzeugt, das für die Unterspannungsetzung des elektrischen Bordnetzes repräsentativ ist;
- einen zweiten Mikroprozessor (19), der in der ersten Steuerschaltung (13) angeordnet ist und Antriebssignale (Pil.Ond., Pil.Exc.) erzeugt;
- ein zweites logisches Gatter (24), das das mindestens erste Steuersignal (Cd.Exc.) in Abhängigkeit von dem mindestens zweiten Kontrollsignal (Auth.Exc.) und mindestens einem ersten Antriebssignal (Pil.Exc.) unter den Antriebssignalen (Pil.Ond., Pil.Exc.) erzeugt.

20. Vorrichtung für die Sicherheitskontrolle eines Generator-/Anlassersystems (1), insbesondere mikro-hybriden Typs, nach dem vorhergehenden Anspruch 19, **dadurch gekennzeichnet, dass** der zweite Mikroprozessor (19) Zustands-/Fehlersignale (Zustände/Fehler) zum ersten Mikroprozessor (17) überträgt.

21. Vorrichtung für die Sicherheitskontrolle eines Generator-/Anlassersystems (1), insbesondere mikro-hybriden Typs, nach einem der vorhergehenden Ansprüche 16 oder 17, **dadurch gekennzeichnet, dass** das erste Steuersignal (Cd.Exc.) die Erregungsschaltung (4) steuert.

22. Vorrichtung für die Sicherheitskontrolle eines Generator-/Anlassersystems (1), insbesondere mikro-hybriden Typs, nach dem vorhergehenden Anspruch 15, **dadurch gekennzeichnet, dass** das erste Diagnosesignal (Diag1.Ond.) von dem Rotationserfassungssystem (8) geliefert wird.

23. Generator-/Anlassersystem (1), insbesondere mikro-hybriden Typs, umfassend die Vorrichtung für die Sicherheitskontrolle nach einem der vorhergehenden Ansprüche 13 bis 22.

24. Generator-/Anlassersystem (1), insbesondere mikro-hybriden Typs, nach dem Anspruch 23, umfassend ferner eine rekuperative Bremsfunktion.

## Claims

1. Method for the failsafe control of an alternator/starter system (1) for a vehicle, in particular of the micro-hybrid type, the said vehicle having at least one electronic control unit (15), vehicle sensors, a data communication bus (16) and an on-board electrical network, the said micro-hybrid system (1) having at least one rotating electrical machine (2) provided with a rotation detection means (8), power circuits (14) having at least one inverter (7) and an excitation circuit (4) supplying the said rotating electrical machine (2), and a rectifier (11) supplied by the said rotating electrical machine (2), energy conversion circuits (12) connected to an energy storage means (9) supplied by the said rectifier (11), a first circuit (13) for commanding the said power circuits (14), and a second circuit (25) for commanding the said energy conversion circuits (12), the said method consisting in:
- generating control signals (Dd. Exc., Dd. Ond., Auth. Exc., Auth. Ond.) of the said system (1) on the basis of first information signals (Capt. Véh.) representing an operational state of the said vehicle, coming from the said vehicle sensors;
**characterized in that** command signals (Cd. Exc., Cd. Ond.) of the said power circuits (14) are generated by means of the said first command circuit (13) on the basis of diagnostic signals (Diag2. Exc., Diag2. Ond.) representing an operational state of the said system; and that the said control signals (Dd. Exc., Dd. Ond., Auth. Exc., Auth. Ond.) are furthermore generated by means of the said second command circuit (25) under the control of the said electronic control unit (15).

2. Method for the failsafe control of an alternator/starter system (1), in particular of the micro-hybrid type, according to Claim 1, **characterized in that** the said command signals (Cd. Ond., Cd. Exc.) are furthermore generated by means of the said first command circuit (13) additionally on the basis of second information signals (CAN) coming from the said data communication bus (16).

3. Method for the failsafe control of an alternator/starter system (1), in particular of the micro-hybrid type, according to any one of the preceding Claims 1 to 2, **characterized in that** the said control signals (Dd. Exc., Dd. Ond., Auth. Exc., Auth. Ond.) are furthermore generated on the basis of at least one first diagnostic signal (Diag1. Ond., Diag1. Exc.) among the said diagnostic signals (Diag1. Ond., Diag1. Exc., Diag2. Ond., Diag2. Exc.).

4. Method for the failsafe control of an alternator/starter system (1), in particular of the micro-hybrid type, according to any one of the preceding Claims 1 or 2, **characterized in that** the said command signals (Cd. Ond., Cd. Exc.) are furthermore generated by means of the said first command circuit (13) additionally on the basis of a first diagnostic signal (Diag1. Ond.) among the said diagnostic signals (Diag1. Ond., Diag1. Exc., Diag2. Ond., Diag2. Exc.).

5. Method for the failsafe control of an alternator/starter system (1), in particular of the micro-hybrid type, according to any one of the preceding Claims 3 to 4, **characterized in that** at least one first command signal (Cd. Exc.) among the said command signals (Cd. Ond., Cd. Exc.) constitutes at least one second diagnostic signal (Diag1. Exc.) among the said diagnostic signals (Diag1. Ond., Diag1. Exc., Diag2. Ond., Diag2. Exc.).

6. Method for the failsafe control of an alternator/starter system (1), in particular of the micro-hybrid type, according to the preceding Claim 5, **characterized in that** the said control signals (Dd. Exc., Dd. Ond., Auth. Exc., Auth. Ond.) and/or the said command signals (Cd. Ond., Cd. Exc.) are furthermore generated additionally on the basis of a third diagnostic signal (Diag3. Ond.) representing a voltage level at an output of the said rectifier (11).

7. Method for the failsafe control of an alternator/starter system (1), in particular of the micro-hybrid type, according to any one of the preceding Claims 3 to 6, **characterized in that** it furthermore consists in:
- generating at least one first control signal (Dd. Ond., Dd. Exc.) among the said control signals (Dd. Exc., Dd. Ond., Auth. Exc., Auth. Ond.) by means of a first microprocessor (17) arranged in the said second command circuit (25), processing at least the said first diagnostic signal (Diag1. Ond.) or the said second diagnostic signal (Diag1. Exc.) or the said third diagnostic signal (Diag3. Ond.);
- generating at least one second control signal (Auth. Exc.) among the said control signals (Dd. Exc., Dd. Ond., Auth. Exc., Auth. Ond.) by means of a first decision circuit (23) in wired logic arranged in the said second command circuit (25);
- generating the said command signals (Cd. Ond., Cd. Exc.) exclusively by means of a second decision circuit (22, 24) in wired logic arranged in the said first command circuit (13).

8. Method for the failsafe control of an alternator/starter system (1), in particular of the micro-hybrid type, according to the preceding Claim 7, **characterized in that** it furthermore consists in:
- generating the said at least second control signal (Auth. Exc.) as a function of at least one first activation signal (Act. Exc.) among the activation and/or inhibition signals (Act. Exc., Inh. Ond.) generated by the said first microprocessor (17) and of a contact signal (+APC/Vbat) representing the powering of the said on-board electrical network with voltage;
- generating the said at least first command signal (Cd. Exc.) as a function of the said at least second control signal (Auth. Exc.) and of at least one first drive signal (Pil. Exc.) among the drive signals (Pil. Ond., Pil. Exc.) generated by a second microprocessor (19) arranged in the said first command circuit (13).

9. Method for the failsafe control of an alternator/starter system (1), in particular of the micro-hybrid type, according to the preceding Claim 8, **characterized in that** it furthermore consists in transmitting status/fault signals (Etats/Défauts) by means of the said second microprocessor (19) to the said first microprocessor (17).

10. Method for the failsafe control of a micro-hybrid system (1) according to any one of the preceding Claims 5 or 6, **characterized in that** the said excitation circuit (4) is commanded by the said first command signal (Cd. Exc.).

11. Method for the failsafe control of an alternator/starter system (1), in particular of the micro-hybrid type, according to any one of the preceding Claims 3 to 10, **characterized in that** the said first diagnostic signal (Diag1. Ond.) is provided by the said rotation detection means (8).

12. Method for the failsafe control of an alternator/starter system (1), in particular of the micro-hybrid type, according to any one of the preceding Claims 1 to 11, **characterized in that** at least one drive signal (Pil. Ond.) among the drive signals (Pil. Ond., Pil. Exc.) generated in the said first command circuit (13) is forced to an inactive state (Pil. Ond. = 0) when a signed rotation speed (SpeedSignal) of the said rotating electrical machine is outside a predetermined speed range ([V1;V2]∪[V1;V2]).

13. Device for the failsafe control of an alternator/starter system (1), in particular of the micro-hybrid type, adapted for carrying out the method according to any one of the preceding Claims 1 to 12, the said vehicle having at least one electronic control unit (15), vehicle sensors, a data communication bus (16) and an on-board electrical network, the said micro-hybrid system (1) having at least one rotating electrical machine (2) provided with a rotation detection means (8), power circuits (14) having at least one inverter (7) and an excitation circuit (4) supplying the said rotating electrical machine (2), and a rectifier (11) supplied by the said rotating electrical machine (2), energy conversion circuits (12) connected to an energy storage means (9) supplied by the said rectifier (11), a first circuit (13) for commanding the said power circuits (14), and a second circuit (25) for commanding the said energy conversion circuits (12), the said device being of the type in which:
- control signals (Dd. Exc., Dd. Ond., Auth. Exc., Auth. Ond.) of the said system (1) are generated on the basis of first information signals (Capt. Véh.) representing an operational state of the said vehicle, coming from the said vehicle sensors;
**characterized in that**
- the said first command circuit (13) receives diagnostic signals (Diag2. Exc., Diag2. Ond.) representing an operational state of the said system (1) and generates command signals (Cd. Exc., Cd. Ond.) of the said power circuits (14);
and that the said second command circuit (25) interfaced with the said control unit (15) generates the said control signals (Dd. Exc., Dd. Ond., Auth. Exc., Auth. Ond.).

14. Device for the failsafe control of an alternator/starter system (1), in particular of the micro-hybrid type, according to the preceding Claim 13, **characterized in that** the said first command circuit (13) furthermore generates the said command signals (Cd. Ond., Cd. Exc.) additionally on the basis of second information signals (CAN) coming from the said data communication bus (16).

15. Device for the failsafe control of an alternator/starter system (1), in particular of the micro-hybrid type, according to any one of the preceding Claims 13 or 14, **characterized in that** the first command circuit (13) furthermore generates the said command signals (Cd. Ond., Cd. Exc.) additionally on the basis of a first diagnostic signal (Diag1. Ond.) among the said diagnostic signals (Diag1. Ond., Diag1. Exc., Diag2. Ond., Diag2. Exc.).

16. Device for the failsafe control of an alternator/starter system (1), in particular of the micro-hybrid type, according to any one of the preceding Claims 14 or 15, **characterized in that** at least one first command signal (Cd. Exc.) among the said command signals (Cd. Ond., Cd. Exc.) constitutes at least one second diagnostic signal (Diag1. Exc.) among the said diagnostic signals (Diag1. Ond., Diag1. Exc., Diag2. Ond., Diag2. Exc.).

17. Device for the failsafe control of an alternator/starter system (1), in particular of the micro-hybrid type, according to the preceding Claim 16, **characterized in that** the said diagnostic signals (Diag1. Ond., Diag1. Exc., Diag2. Ond., Diag2. Exc.) comprise a third diagnostic signal (Diag3. Ond.) representing a voltage level at an output of the said rectifier (11).

18. Device for the failsafe control of an alternator/starter system (1), in particular of the micro-hybrid type, according to any one of the preceding Claims 15 to 17, **characterized in that** it furthermore comprises:
- a first microprocessor (17) arranged in the said second command circuit (25), processing at least the said first diagnostic signal (Diag1. Ond.) or the said second diagnostic signal (Diag1. Exc.) or the said third diagnostic signal (Diag3. Ond.) and generating at least one first control signal (Dd. Ond., Dd. Exc.) among the said control signals (Dd. Exc., Dd. Ond., Auth. Exc., Auth. Ond.);
- a first decision circuit (23) in wired logic arranged in the said second command circuit (25) and generating at least one second control signal (Auth. Exc.) among the said control signals (Dd. Exc., Dd. Ond., Auth. Exc., Auth. Ond.);
- a second decision circuit (22, 24) in wired logic arranged in the said first command circuit (13) and generating the said command signals (Cd. Ond., Cd. Exc.).

19. Device for the failsafe control of an alternator/starter system (1), in particular of the micro-hybrid type, according to the preceding Claim 18, **characterized in that** it furthermore comprises:
- a first logic gate (23) producing the said at least second control signal (Auth. Exc.) as a function of at least one first activation signal (Act. Exc.) among the activation and/or inhibition signals (Act. Exc., Inh. Ond.) generated by the said first microprocessor (17) and of a contact signal (+APC/Vbat) representing the powering of the said on-board electrical network with voltage;
- a second microprocessor (19) arranged in the said first command circuit (13) and generating drive signals (Pil. Ond., Pil. Exc.);
- a second logic gate (24) generating the said at least first command signal (Cd. Exc.) as a function of the said at least second control signal (Auth. Exc.) and of at least one first drive signal (Pil. Exc.) among the said drive signals (Pil. Ond., Pil. Exc.).

20. Device for the failsafe control of an alternator/starter system (1), in particular of the micro-hybrid type, according to the preceding Claim 19, **characterized in that** the said second microprocessor (19) transmits status/fault signals (Etats/Défauts) to the said first microprocessor (17).

21. Device for the failsafe control of an alternator/starter system (1), in particular of the micro-hybrid type, according to any one of the preceding claims 16 or 17, **characterized in that** the said first command signal (Cd. Exc.) commands the said excitation circuit (4).

22. Device for the failsafe control of an alternator/starter system (1), in particular of the micro-hybrid type, according to the preceding Claim 15, **characterized in that** the said first diagnostic signal (Diag1. Ond.) is provided by the said rotation detection means (8).

23. Alternator/starter system (1), in particular of the micro-hybrid type, comprising the failsafe control device according to any one of the preceding Claims 13 to 22.

24. Alternator/starter system (1), in particular of the micro-hybrid type, according to Claim 23, furthermore comprising a regenerative braking function.
